# EUROPEAN PATENT APPLICATION

(11) **EP 4 793 231 A1**
(43) Date of publication of application: **19.08.2026**
(21) Application number: 24869412.7
(22) Date of filing: 30.12.2024
(51) Int. Cl.: C01B 25/37, C01B 25/45, H01M 4/58

(54) **ANHYDROUS IRON PHOSPHATE AND PREPARATION METHOD THEREFOR, POSITIVE ELECTRODE MATERIAL AND PREPARATION METHOD THEREFOR, POSITIVE ELECTRODE SHEET, AND SECONDARY BATTERY**

(30) Priority: 26.12.2024 CN 202411942055
(71) Applicant: Hubei Wanrun New Energy Technology Co., Ltd., Shiyan, Hubei 442500 (CN)
(72) Inventor: LIU, Yandong, Shiyan, Hubei 442500 (CN); GAO, Kai, Shiyan, Hubei 442500 (CN); CHEN, Xiaoming, Shiyan, Hubei 442500 (CN); HUANG, Xiaoyan, Shiyan, Hubei 442500 (CN)
(74) Representative: Studio Torta S.p.A.
(86) International application number: PCT/CN2024/144026
(87) International publication number: WO 2026/137490

(57) **Abstract**

Provided is an anhydrous ferric phosphate and a preparation method thereof, a cathode electrode material and a preparation method thereof, a cathode electrode sheet, and a secondary battery, belonging to the field of a secondary battery. In terms of weight percentage, a quantity proportion of particles with a particle size greater than or equal to 0.01 µm and less than 0.1 µm in primary particles of the anhydrous ferric phosphate is 10%-30%, a quantity proportion of particles with a particle size of 0.1 µm-0.2 µm is 50%-60%, a quantity proportion of particles with a particle size greater than 0.2 µm and less than 0.4 µm is 15%-30%, and a quantity proportion of particles with a particle size of 0.4 µm-0.6 µm is 0.2%-10%. The present disclosure is beneficial for obtaining a well-dispersed anhydrous ferric phosphate by controlling particle gradation, which serves as a basis for preparing a highly compacted cathode electrode material and is advantageous for obtaining a cathode electrode material with high compact density, good rate performance, and high charging and discharging efficiency.

## Description

### Technical Field

The present disclosure relates to the technical field of a secondary battery, specifically to an anhydrous ferric phosphate and a preparation method thereof, a cathode electrode material and a preparation method thereof, a cathode electrode sheet, and a secondary battery.

### Background

Lithium iron phosphate is a cathode electrode material with high specific capacity, high energy, environmental friendliness, and excellent safety performance, which has the characteristics of high theoretical specific capacity (2400 mAh/g), low lithium insertion potential (3.4 V), wide working voltage range (3.4 V-4.4 V), and great safety performance, and has great application prospects in the fields of electric vehicles and energy storage.

However, in many energy storage applications, a compaction density (referred to as compaction) and charging efficiency and discharging efficiency (referred to as energy efficiency) of a lithium iron phosphate battery still cannot meet user needs well. The compaction density is an important parameter for measuring the compactness of a lithium iron phosphate electrode material, which is closely related to a volumetric energy density and cycling performance of an electrode. The charging efficiency and discharging efficiency refers to an energy conversion efficiency of a battery during the charging efficiency and discharging process. High charging efficiency and discharging efficiency means that the battery loses less energy during the charging efficiency and discharging process, which can improve the energy utilization rate and cycle life of the battery.

Improving the compaction density of lithium iron phosphate is an effective means to increase a driving range, but in existing technologies, the compaction density is generally increased by increasing a sintering temperature or reducing a metal doping amount. Increasing the sintering temperature can lead to an excessive proportion of single crystal lithium iron phosphate, increasing polarization, and reducing the doping amount can lead to a decrease in a diffusion rate of lithium ions, all of which can result in a decrease in the charging efficiency and discharging efficiency.

Lithium iron phosphate is generally prepared by mixing and sintering an anhydrous ferric phosphate with a lithium source, etc. The performance of the anhydrous ferric phosphate has a significant impact on lithium iron phosphate. For example, when a particle size of the anhydrous ferric phosphate is too large, it is difficult to dehydrate during a rotary furnace sintering process, resulting in low crystallinity of ferric phosphate, which cause a crystal form transformation and producing an impure phase during the sintering process of preparing lithium iron phosphate, leading to a decrease in the electrical performance of lithium iron phosphate. If the particle size of the anhydrous ferric phosphate is too small, it will cause primary particle aggregation, washing and impurity removal efficiency to decrease, and an impurity content to be high, and the high proportion of small particles in the sintering process of preparing lithium iron phosphate is not conducive to the preparation of highly compacted lithium iron phosphate products.

Therefore, there is still significant room for improvement in the charging efficiency and discharging efficiency of highly compacted lithium iron phosphate in existing technologies. However, researches on the key raw material anhydrous ferric phosphate mainly focus on the regulation of an iron to phosphorus ratio and BET specific surface area. The electrical performance of lithium iron phosphate is mainly improved by increasing the iron to phosphorus ratio and reducing the BET specific surface area, while the lithium iron phosphate prepared in this way tends to have small particles, long strip-like and sheet-like structures, which cannot achieve great particle gradation and low distribution packing density. The compaction density of lithium iron phosphate prepared from ferric phosphate with high iron to phosphorus ratio is generally low. The sanding difficulty of strip-like and sheet-like ferric phosphate is greater, the particles are irregular, and the carbon coating effect of the prepared lithium iron phosphate is poor, meanwhile the powder has high internal resistance and poor electrical performance. The anhydrous ferric phosphate with a small BET specific surface area is mainly achieved by increasing the sintering temperature of the rotary furnace, which is difficult to sand, has a high sintering temperature, and poor discharging performance. Therefore, the discharging performance of highly compacted lithium iron phosphate currently prepared will decrease after the compaction density is increased, and there is currently no lithium iron phosphate material with high compaction density and high charging efficiency and discharging efficiency.

### Summary

In view of the technical problems existing in the background technology, the present disclosure provides an anhydrous ferric phosphate and a preparation method thereof, a cathode electrode material and a preparation method thereof, a cathode electrode sheet, and a secondary battery, aiming to solve the technical problem of poor particle size distribution of the anhydrous ferric phosphate in existing technology, which leads to the inability of a lithium iron phosphate cathode electrode material to balance high compaction density and high charging efficiency and discharging efficiency.

In a first aspect, examples of the present disclosure provide an anhydrous ferric phosphate. In terms of weight percentage, a quantity proportion of particles with a particle size greater than or equal to 0.01 µm and less than 0.1 µm in primary particles of the anhydrous ferric phosphate is 10%-30%, a quantity proportion of particles with a particle size of 0.1 µm-0.2 µm is 50%-60%, a quantity proportion of particles with a particle size greater than 0.2 µm and less than 0.4 µm is 15%-30%, and a quantity proportion of particles with a particle size of 0.4 µm-0.6 µm is 0.2%-10%.

In the technical solution of examples of the present disclosure, by controlling a particle gradation within the above-mentioned range, a well-dispersed anhydrous ferric phosphate is obtained. The anhydrous ferric phosphate with matching of large and small particles becomes the basis for preparing a highly compacted cathode electrode material, ensuring the normal growth of lithium iron phosphate crystal particles under high doping conditions, and is advantageous for obtaining a cathode electrode material with high compaction density, great rate performance, and high charging efficiency and discharging efficiency.

In some examples, a shape of an anhydrous ferric phosphate particle is quasi spherical, with a sphericity of 0.84-0.98; a tap density of the anhydrous ferric phosphate is 0.93 g/cm³-1.13 g/cm³, a compaction density is 1.57 g/cm³-1.61 g/cm³, and an iron to phosphorus ratio is (0.957-0.970):1.

In these examples, a sphericity of the anhydrous ferric phosphate is higher and a tap density is higher, indicating great particle packing density and reasonable particle size distribution of the anhydrous iron phosphate. The compaction density of lithium iron phosphate prepared from the anhydrous iron phosphate as a raw material is also relatively higher. Combined with an appropriate iron to phosphorus ratio, it is beneficial to further improve the charging efficiency and discharging efficiency of lithium iron phosphate.

In a second aspect, examples of the present disclosure provide a method for preparing an anhydrous ferric phosphate, including:
mixing a ferrous source with a first dispersant to obtain a first raw material liquid; mixing a first phosphorus source with a second dispersant to obtain a second raw material liquid;
mixing the first raw material liquid and the second raw material liquid with a first oxidant, and undergoing a first reaction treatment to obtain a first mixture;
adding a second phosphorus source to the first mixture, undergoing a second reaction treatment, and adding a second oxidant to obtain a second mixture;
adjusting a pH value and temperature of the second mixture, and undergoing a third reaction treatment to obtain the anhydrous ferric phosphate; and
the first dispersant includes a cationic monomer and a coupling agent, and the second dispersant includes an anionic monomer and a chain transfer agent.

In the technical solution of examples of the present disclosure, the anhydrous ferric phosphate is prepared by a precipitation method, and a surface tension of the solution is reduced and a reaction rate is increased by a surfactant-like action of polymers formed by the first dispersant and the second dispersant. At the same time, the dispersion effect and complexation effect of the polymers are used to regulate the crystal morphology, and the reaction process is controlled by the stepwise feeding of the oxidant and phosphorus source, and the iron to phosphorus ratio is controlled. As a result, the anhydrous ferric phosphate prepared has higher sphericity, more reasonable particle gradation, and significantly improved compaction density under the condition of low proportion of large particles. Therefore, the compaction density of lithium iron phosphate prepared by the anhydrous ferric phosphate is significantly increased, and a rate performance of charging and discharging is better.

In some examples, the cationic monomer includes diallyl dimethyl ammonium chloride and/or acryloyloxyethyl trimethyl ammonium chloride; and/or, the coupling agent includes vinyltrimethoxysilane and/or 3-(methacryloyloxy)propyltrimethoxysilane; when the cationic monomer includes diallyl dimethyl ammonium chloride and acryloyloxyethyl trimethyl ammonium chloride, a mass ratio of diallyl dimethyl ammonium chloride to acryloyloxyethyl trimethyl ammonium chloride is 1:(2.5-3.5); and/or,
the anionic monomer includes one or more of methacrylic acid, itaconic acid, and fumaric acid; and/or, the chain transfer agent includes sodium hypophosphite and/or isopropanol; when the anionic monomer includes methacrylic acid and itaconic acid, a mass ratio of methacrylic acid to itaconic acid is 1:(2.5-3.5); and when the anionic monomer includes methacrylic acid and fumaric acid, a mass ratio of methacrylic acid to fumaric acid is 1:(2.5-3.5); and/or, a ratio of the amount of substance of the cationic monomer to the coupling agent is 100:(20-35); and/or, a ratio of the amount of substance of the anionic monomer to the chain transfer agent is 100:(10-15).

In these examples, the cationic monomers and anionic monomers mentioned above are more conducive to the smooth polymerization of the polymers with the assistance of a coupling agent and a chain transfer agent. The polymers are surfactant-like, and after initially playing a role in dispersing ions, the polymers formed by the cationic monomers and anionic monomers continues to disperse the crystal particles of ferric phosphate. At the same time, the polymers formed by the anionic monomers and cationic monomers further reduces a surface tension of the solution, better promotes the spherical growth of ferric phosphate crystals, enhances the crystallinity of ferric phosphate crystals, and increases the tap density of the resulting anhydrous ferric phosphate.

In some examples, a ratio of the amount of substance of an iron element in the ferrous source to the first dispersant is 1:(0.0125-0.0150); and/or, a ratio of the amount of substance of an iron element in the ferrous source to a phosphorus element in the phosphorus source is 1:(0.9-1.1); and/or, a ratio of the amount of substance of a phosphorus element in the phosphorus source to the second dispersant is 1:(0.0150-0.0170); and/or, the ferrous source is prepared by the following method: mixing a by-product of titanium dioxide containing ferrous sulfate with water, heating and dissolving, adding an ammonia water with a mass fraction of 5%-15% for settling, filtering and retaining a filtrate to obtain the ferrous source; and/or, independently, the first phosphorus source and the second phosphorus source are prepared by the following method: dissolving monoammonium phosphate with phosphoric acid and water, filtering, and adding an ammonia water with a mass fraction of 5%-15% to an obtained filtrate to adjust a pH value of the obtained filtrate to 6-8.

In these examples, the above-mentioned ratio conditions are more conducive to the sufficient precipitation of iron ions by phosphate ions, and further enhance the binding forces between the positive charge of cationic groups in the polymers formed by the anionic monomers and cationic monomers which are from cationic monomers and phosphate ions, as well as the binding forces between the anionic groups in the polymers formed by the anionic monomers and cationic monomers which are from the anionic monomers and the iron ions, promoting the spherical growth of particles and playing a great role in particle size regulation.

In some examples, the first oxidant includes hydrogen peroxide and/or sodium peroxide; and/or, the second oxidant includes hydrogen peroxide and/or sodium peroxide; and/or, a mass ratio of the first phosphorus source to the second phosphorus source is (15-25):(75-85); and/or, a ratio of the amount of substance of the first oxidant to an iron element in the ferrous source is (0.6-1.1):1; and/or, a ratio of the amount of substance of the second oxidant to an iron element in the ferrous source is (2.1-2.8):1.

In these examples, the concentrations of the oxidant and reactants mentioned above jointly regulate the reaction rate to a more appropriate extent; by controlling the addition amount of the first and second phosphorus sources in a step-by-step manner, the generation and growth of ferric phosphate can be controlled, further improving the particle size gradation and facilitating the further improvement of the sphericity and dispersibility of the anhydrous ferric phosphate.

In some examples, in the first reaction treatment, a temperature is 40 °C-60 °C, and a time is 0.5 h-1 h; and/or, in the second reaction treatment, a temperature is 40 °C-60 °C, and a time is 5 min-10 min.

In these examples, the precipitation rate and dispersion effect of ferric phosphate are better within the above-mentioned reaction temperature and time range, further improving the particle size gradation of anhydrous ferric phosphate particles.

In some examples, the step of adjusting a pH value and temperature of the second mixture, and undergoing a third reaction treatment to obtain the anhydrous ferric phosphate includes: adjusting a temperature of the second mixture to 40 °C-60 °C, controlling a pH value of the second mixture to 0.9-1.5, raising the temperature to 90 °C-95 °C, and reacting to the pH value of 1.6-2.0 to obtain a third mixture; and subjecting the third mixture sequentially to pressure filtration, rinsing, flash evaporation, drying, crushing, and sieving to obtain the anhydrous ferric phosphate.

In these examples, by adjusting the temperature and pH value of the mixture within an appropriate range, stable precipitation of ferric phosphate is further controlled. Combined with pressure filtration, rinsing, flash evaporation, drying, crushing, and sieving, an anhydrous ferric phosphate with high sphericity, great dispersibility, and great particle size gradation is prepared, making the preparation method more practical.

In a third aspect, examples of the present disclosure provide a cathode electrode material, a general formula of the cathode electrode material is LiFe_{1-a-b-c}YₐCe_{b}M_{c}PO₄@C, wherein M is one or more of tin, titanium, boron, and manganese, a is 0.007-0.013, b is 0.029-0.057, and c is 0.01-0.033; and a mass fraction of C in the cathode electrode material is 1.2%-1.4%.

In these examples, the cathode electrode material contains the above-mentioned anhydrous ferric phosphate, which is doped and modified by three different mechanisms and ratios of metal cations to refine crystal particles. The metal cations doping combine with phosphate ions in anhydrous ferric phosphate to reduce the coarsening effect of phosphates on crystal particles, ensuring initial structure of ferric phosphate and the normal growth of crystal particles under high doping conditions. Therefore, the cathode electrode material has the advantages of high compaction density, great rate performance, and high charging efficiency and discharging efficiency.

In some examples, an average particle size of primary particles of the cathode electrode material is 0.24 µm-0.34 µm; a number fraction of primary particles with an average particle size greater than or equal to 1 µm in the cathode electrode material is less than or equal to 3.20%, and a compaction density is 2.52 g/cm³-2.64 g/cm³.

In these examples, the raw material can be anhydrous ferric phosphate with a matching of large and small particle sizes, which can control the crystallization and growth process of lithium iron phosphate, further reduce the generation of large-particle single crystals in highly compacted lithium iron phosphate, and improve the compaction density and energy storage performance of the cathode electrode material.

In a fourth aspect, examples of the present disclosure provide a method for preparing a cathode electrode material, including the following steps:
mixing the above-mentioned anhydrous ferric phosphate of the present disclosure, a lithium source, a carbon source, a chelating agent, and a dopant with water to obtain a mixed material;
sintering the mixed material under a protective atmosphere to obtain the cathode electrode material; and
the dopant includes yttrium oxide, cerium oxide, and other compounds containing oxygens, and the other compounds containing oxygens include one or more of tin oxide, titanium oxide, boron oxide, and compounds containing manganese and oxygen.

In these examples, the anhydrous ferric phosphate with high crystallinity, low impurity content, and excellent particle size gradation is used as the raw material, and the crystallization and growth process of lithium iron phosphate is controlled, significantly reducing the generation of large-particle single crystals in highly compacted lithium iron phosphate. During the crystallization and growth process of lithium iron phosphate, the chelating agent plays an inhibitory role before carbon coating, effectively avoiding the formation of crystal nuclei and reducing the generation of ineffective single crystals during the growth process of lithium iron phosphate particles. On the one hand, it ensures the effective proportion of high-efficiency lithium iron phosphate and improves the compaction density of lithium iron phosphate; on the other hand, it ensures great carbon coating effect and low powder internal resistance and polarization of lithium iron phosphate, making the cathode electrode material have excellent charging performance, discharging performance, and long-lasting cycling performance.

In some examples, the chelating agent includes glycerol and/or sodium gluconate; and/or, the dopant includes yttrium oxide, cerium oxide, and other compounds containing oxygens, wherein the other compounds containing oxygens include one or more of tin dioxide, titanium dioxide, boron trioxide, and manganese carbonate; a mass ratio of the yttrium oxide, the cerium oxide, and the other compounds containing oxygens is 1:(2-3):(1-2); and/or, a mass ratio of the anhydrous ferric phosphate to the chelating agent is 1:(0.02-0.03); and/or, a mass ratio of the anhydrous ferric phosphate to the dopant is 1:(0.008-0.009); and/or, a ratio of the amount of substance of the anhydrous ferric phosphate to the lithium source is 1:(1-1.05); and/or, a mass ratio of the anhydrous ferric phosphate to the carbon source is 1:(0.09-0.11).

In these examples, the above-mentioned inhibitor binds to the active sites of the raw material, reducing the generation of lithium iron phosphate single crystals and improving the electrical performance of lithium iron phosphate. By controlling the ratio of each raw material within the above-mentioned range, the waste of raw materials can be reduced on the basis of more complete synthesis of lithium iron phosphate, thereby further reducing the preparation cost while maintaining the excellent electrical performance of lithium iron phosphate.

In some examples, the step of sintering the mixed material under a protective atmosphere to obtain the cathode electrode material includes: grinding the mixed material to obtain a ground material, and a D50 particle size of the ground material is 0.38 µm-0.42 µm; conducting spray drying on the ground material to obtain a sprayed material, and a D50 particle size of the sprayed material is 3.4 µm-6.7 µm; sintering the sprayed material under the protective atmosphere to obtain the cathode electrode material; and in the sintering, a temperature is 760 °C-820 °C and a time is 10 h-18 h.

In these examples, the anhydrous ferric phosphate has high sphericity, great particle gradation, and smaller particle size of the product of grinding and spray drying. By controlling the sintering temperature within an appropriate range, on the one hand, the compaction density can be increased, the diffusion rate of lithium ions can be increased, and on the other hand, the proportion and polarization of single crystals of lithium iron phosphate can be reduced, resulting in better electrical performance of lithium iron phosphate.

In a fifth aspect, examples of the present disclosure provide a cathode electrode sheet, including a cathode electrode current collector and a cathode electrode active layer arranged on at least one side of the cathode electrode current collector. The cathode electrode active layer includes the above-mentioned cathode electrode material.

In these examples, the cathode electrode sheet contains the above-mentioned cathode electrode material, thus having the advantages of great rate performance and high charging efficiency and discharging efficiency.

In a sixth aspect, examples of the present disclosure provide a secondary battery, including the above-mentioned cathode electrode sheet.

In these examples, the secondary battery contains the above-mentioned cathode electrode sheet, thus having the advantages of great rate performance and high charging efficiency and discharging efficiency.

The foregoing description is merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### Brief Description of the Drawings

To describe the technical solution of the present application more clearly, the following briefly describes the accompanying drawings used in the present application. Apparently, the accompanying drawings in the following descriptions show merely some embodiments of the present application, and those of ordinary skill in the art may still derive other drawings from the accompanying drawings without creative efforts.
FIG. 1 shows an SEM image of an anhydrous ferric phosphate prepared in Example 5 of the present disclosure;
FIG. 2 shows an SEM image of an anhydrous ferric phosphate prepared in Comparative Example 5 of the present disclosure;
FIG. 3 shows an XRD comparison chart of an anhydrous ferric phosphate prepared in Example 5 and Comparative Example 5 of the present disclosure;
FIG. 4 shows an SEM particle size analysis chart of an anhydrous ferric phosphate prepared in Example 5 of the present disclosure;
FIG. 5 shows an SEM particle size analysis chart of an anhydrous ferric phosphate prepared in Comparative Example 5 of the present disclosure.

### Detailed Description of the Embodiments

The examples of the technical solutions of the present disclosure will be described in detail below in conjunction with the accompanying drawings. The following examples are only intended to provide a clearer explanation of the technical solutions of the present disclosure, and therefore they are only used as examples and rather than as limitations to the scope of protection of the present disclosure.

Unless otherwise defined, all technical and scientific terms as used herein have the same meanings as those commonly understood by those skilled in the technical field of the present disclosure; the terms as used herein are only intended for the purpose of describing specific examples rather than limiting the present disclosure; and the terms "including" and "having" in the description and claims, as well as the accompanying drawings of the present disclosure, and any variations thereof, are intended to cover non-exclusive inclusion.

In the description of examples of the present disclosure, the technical terms "first" and "second", etc., are only used to distinguish different objects and cannot be understood as indicating or implying relative importance or implicitly indicating the number, specific order or primary and secondary relationships of the indicated technical features. In the description of examples of the present disclosure, "multiple" means more than two, unless otherwise specifically defined explicitly.

Reference to "examples" herein means that specific features, structures, or characteristics described in combination with examples may be included in at least one example of the present disclosure. The phrase appearing at various positions in the specification does not necessarily refer to the same example, nor is it an independent or alternative example mutually exclusive with other examples. Those skilled in the art will explicitly and implicitly understand that the examples described herein can be combined with other examples.

In the description of the examples of the present disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the examples of the present disclosure, the term "multiple" refers to more than two (including two), similarly, "multiple groups" refers to more than two groups (including two groups), and "multiple pieces" refers to more than two pieces (including two pieces).

In the description of the examples of the present disclosure, unless otherwise specified, a solvent used for a raw material liquid, reaction liquid, solution, etc. is selected from at least one of deionized water, distilled water, pure water, and ultrapure water. Similarly, unless otherwise specified, in the description of the examples of the present disclosure, "water" is selected from at least one of deionized water, distilled water, pure water, and ultrapure water.

A main way to improve a compaction density of lithium iron phosphate at present is to increase a sanding particle size and improve a particle size of finished products. However, these ways lead to a decrease in the electrical performance of lithium iron phosphate, especially in terms of the charging performance and the discharging performance. One feasible method is to reduce a BET specific surface area of a key raw material which is anhydrous ferric phosphate. However, the anhydrous ferric phosphate with a small BET specific surface area is mainly achieved by increasing a sintering temperature of a rotary furnace, which is difficult to sand, has a high sintering temperature, poor discharging performance, and unsatisfactory particle size gradation. Therefore, the discharging performance of the currently prepared highly compacted lithium iron phosphate will decrease after the compaction density is increased.

The present disclosure provides an anhydrous ferric phosphate and a preparation method thereof, a cathode electrode material and a preparation method thereof, a cathode electrode sheet, and a secondary battery. The anhydrous ferric phosphate has a suitable particle size gradation, which can achieve tight packing and further serve as a key raw material for preparing a cathode electrode material, improving the compaction density, charging performance, and discharging performance.

In order to solve the technical problem of poor particle size distribution of the anhydrous ferric phosphate, which leads to the inability of lithium iron phosphate cathode electrode material to balance high compaction density and high charging efficiency and discharging efficiency, the present disclosure provides an anhydrous ferric phosphate and a preparation method thereof, a cathode electrode material and a preparation method thereof, a cathode electrode sheet, and a secondary battery. By controlling an appropriate particle size gradation of the anhydrous ferric phosphate, it can be tightly packed and further used as a key raw material for preparing a cathode electrode material, improving the compaction density, the charging performance and the discharging performance of the cathode electrode material. As a result, the compaction density, the charging performance and the discharging performance of the cathode electrode sheet and the secondary battery can also be improved.

In a first aspect, examples of the present disclosure provide an anhydrous ferric phosphate. In terms of weight percentage, a quantity proportion of particles with a particle size greater than or equal to 0.01 µm and less than 0.1 µm in primary particles of the anhydrous ferric phosphate is 10%-30%, a quantity proportion of particles with a particle size of 0.1 µm-0.2 µm is 50%-60%, a quantity proportion of particles with a particle size greater than 0.2 µm and less than 0.4 µm is 15%-30%, and a quantity proportion of particles with a particle size of 0.4 µm-0.6 µm is 0.2%-10%.

Preferably, in terms of weight percentage, a quantity proportion of particles with a particle size greater than or equal to 0.01 µm and less than 0.1 µm in primary particles of the anhydrous ferric phosphate is 13.27%-22.45%, a quantity proportion of particles with a particle size of 0.1 µm-0.2 µm is 54.23%-59.37%, a quantity proportion of particles with a particle size greater than 0.2 µm and less than 0.4 µm is 17.98%-26.76%, and a quantity proportion of particles with a particle size of 0.4 µm-0.6 µm is 0.3%-7.46%.

More preferably, in terms of weight percentage, a quantity proportion of particles with a particle size greater than or equal to 0.01 µm and less than 0.1 µm in primary particles of the anhydrous ferric phosphate is 15.04%-21.03%, a quantity proportion of particles with a particle size of 0.1 µm-0.2 µm is 54.73%-59.37%, a quantity proportion of particles with a particle size greater than 0.2 µm and less than 0.4 µm is 17.98%-25.76%, and a quantity proportion of particles with a particle size of 0.4 µm-0.6 µm is 1.49%-6.68%.

Typically but not limited, in terms of weight percentage, a quantity proportion of particles with a particle size greater than or equal to 0.01 µm and less than 0.1 µm in primary particles of the anhydrous ferric phosphate is 10%, 15%, 20%, 25%, 30% or a range value composed of any two numerical values, a quantity proportion of particles with a particle size of 0.1 µm-0.2 µm is 50%, 52%, 55%, 58%, 60% or a range value composed of any two numerical values, a quantity proportion of particles with a particle size greater than 0.2 µm and less than 0.4 µm is 15%, 18%, 20%, 22%, 25%, 28%, 30% or a range value composed of any two numerical values, and a quantity proportion of particles with a particle size of 0.4 µm-0.6 µm is 0.2%, 1%, 2%, 5%, 8%, 10% or a range value composed of any two numerical values.

By controlling the particle size gradation within the above-mentioned range, a well dispersed anhydrous ferric phosphate is obtained, with normal particle size distribution range. After sintering, the overall particle size of the anhydrous ferric phosphate will grow, but still maintain great particle size distribution, thus ensuring that the proportion of the large and small particles of the anhydrous ferric phosphate is moderate, thus the proportion of coarse particles is reduced, while high compaction density and high discharging performance are obtained through the dense packing of anhydrous ferric phosphate particles. The anhydrous ferric phosphate with matching of large and small particle sizes becomes basis for further preparation of lithium iron phosphate material with high compaction density, ensuring that the prepared lithium iron phosphate grows normally under high doping conditions, resulting in cathode electrode material with high compaction density, great rate performance, and high charging efficiency and discharging efficiency.

Further, in some examples, a shape of an anhydrous ferric phosphate particle is quasi spherical, with a sphericity of 0.84-0.98, preferably 0.96-0.98.

In some examples, a tap density of the anhydrous ferric phosphate is 0.93 g/cm³-1.13 g/cm³, preferably 0.95 g/cm³-1.06 g/cm³.

In some examples, a compaction density is 1.57 g/cm³-1.61 g/cm³, preferably 1.58 g/cm³-1.61 g/cm³.

In some examples, an iron to phosphorus ratio is (0.957-0.970):1, preferably (0.963-0.966):1. The iron to phosphorus ratio is a ratio of the amount of substance of iron element to phosphorus element in the anhydrous ferric phosphate.

In some examples, a BET specific surface area of the anhydrous ferric phosphate is 8 m²/g-10.8 m²/g, preferably 8.65 m²/g-9.37 m²/g.

Typically but not limited, a particle shape of the anhydrous ferric phosphate is spherical, with a sphericity of 0.84, 0.85, 0.90, 0.95, 0.98, or a range value composed of any two numerical values; a tap density of the anhydrous ferric phosphate is 0.93 g/cm³, 0.95 g/cm³, 1.00 g/cm³, 1.05 g/cm³, 1.10 g/cm³, 1.13 g/cm³ or a range value composed of any two numerical values, a compaction density is 1.57 g/cm³, 1.58 g/cm³, 1.59 g/cm³, 1.60 g/cm³, 1.61 g/cm³ or a range value composed of any two numerical values, the iron to phosphorus ratio is 0.957:1, 0.960:1, 0.965:1, 0.970:1 or a range value composed of any two numerical values, and a BET specific surface area of the anhydrous ferric phosphate is 8 m²/g, 8.5 m²/g, 9 m²/g, 9.5 m²/g, 10 m²/g, 10.5 m²/g, 10.8 m²/g or a range value composed of any two numerical values.

In the technical solution of examples of the present disclosure, sphericity of the anhydrous ferric phosphate is higher and tap density is higher, indicating great particle packing density and reasonable particle size distribution, and relatively higher compaction density of lithium iron phosphate. In the case of great particle gradation, further reducing grinding time in the preparation process of lithium iron phosphate can further reduce energy consumption and improve efficiency while ensuring the performance of lithium iron phosphate. A smaller iron to phosphorus ratio is also beneficial for generating excess phosphate ions, further modifying lithium iron phosphate to improve the compaction density and charging efficiency and discharging efficiency.

In a second aspect, examples of the present disclosure provide a method for preparing anhydrous ferric phosphate, including:
mixing a ferrous source with a first dispersant to obtain a first raw material liquid; mixing a first phosphorus source with a second dispersant to obtain a second raw material liquid;
mixing the first raw material liquid and the second raw material liquid with a first oxidant, and undergoing a first reaction treatment to obtain a first mixture;
adding a second phosphorus source to the first mixture, undergoing a second reaction treatment, and adding a second oxidant to obtain a second mixture;
adjusting a pH value and temperature of the second mixture, and undergoing a third reaction treatment to obtain the anhydrous ferric phosphate; and
the first dispersant includes a cationic monomer and a coupling agent, and the second dispersant includes an anionic monomer and a chain transfer agent.

The most important reaction in the preparation of the anhydrous ferric phosphate by co-precipitation method is to control iron to phosphorus ratio and reaction process, followed by controlling particle size and morphology. The present disclosure reduces surface tension of the reaction solvent and increases reaction rate by surfactant-like action of polymers formed by the first dispersant and the second dispersant. At the same time, the dispersion effect and complexation effect of the polymers (such as the adsorption and binding of carboxyl groups in the anions of the polymers with ferrous ions) are utilized to regulate the crystal morphology, and the reaction process and the iron to phosphorus ratio can be controlled by the stepwise feeding of the oxidant and phosphorus source. As a result, the anhydrous ferric phosphate prepared has higher sphericity, more reasonable particle gradation, and significantly improved compaction density under the condition of low proportion of large particles, thus the compaction density of lithium iron phosphate prepared by anhydrous ferric phosphate is significantly increased, leading to better rate performance in terms of charging and discharging.

Specifically, the present disclosure uses co-precipitation method to prepare ferric phosphate, where iron ions and phosphate ions undergo a precipitation reaction in proportion. Cationic monomers are organic compounds with cations and carbon-carbon double bonds, while anionic monomers are organic compounds with anions and carbon-carbon double bonds. Cationic monomers and anionic monomers undergo polymerization reaction under action of oxidant and reducing agent (partially iron in the form of ferrous ions) to produce polymers with anionic groups and cationic groups. During the forming reaction of ferric phosphate, there are ion active parts, which make it easy to adsorb polymers; the polymers adsorb onto the surface of ferric phosphate particles to form adsorption layer, which facilitates particle spacing and dispersion; at the same time, the polymers adsorb onto the surface of the ferric phosphate particles through electrostatic interactions, occupying active sites and limiting the growth of ferric phosphate, thereby inhibiting the growth of ferric phosphate crystals; in addition, the polymers are surfactant-like, and can reduce the surface tension of the solution, promote the spherical growth of the ferric phosphate particles to achieve the lowest surface energy, and thus control the reaction rate and particle morphology.

In summary, the present disclosure controls the generation and growth of ferric phosphate through the stepwise feeding of the phosphorus source combined with the complexation and dispersion of the polymers formed by the cationic monomers and anionic monomers, achieving particle size gradation of the anhydrous ferric phosphate and thus preparing the anhydrous ferric phosphate with high sphericity, great dispersibility, and great particle size gradation.

When preparing the lithium iron phosphate cathode material based on the anhydrous ferric phosphate of the present disclosure, due to the better dispersibility, higher crystallinity, and better particle size gradation of the anhydrous ferric phosphate prepared by the aforementioned method, and the interpenetration, barrier effect and layer effect of the polymers formed by the cationic monomers and anionic monomers, which is also conducive to improving the rinsing efficiency, combined with controlling the crystallization and growth of lithium iron phosphate in the preparation process of lithium iron phosphate, it is beneficial to significantly reduce the generation of large single crystals in highly compacted lithium iron phosphate, ensure effective proportion of high-efficiency lithium iron phosphate, and endow it with excellent energy storage performance; and at the same time, when the iron to phosphorus ratio of the aforementioned anhydrous ferric phosphate is (0.957-0.970):1, excess phosphates can also modify lithium iron phosphate to ensure the normal growth of its crystal particles under high doping conditions, thereby preparing cathode electrode material with high compaction density, great rate performance, and high charging efficiency and discharging efficiency.

Further, in some examples, the cationic monomer includes diallyl dimethyl ammonium chloride and/or acryloyloxyethyl trimethyl ammonium chloride.

In some examples, the cationic monomer includes diallyl dimethyl ammonium chloride and acryloyloxyethyl trimethyl ammonium chloride, a mass ratio of diallyl dimethyl ammonium chloride to acryloyloxyethyl trimethyl ammonium chloride is 1:(2.5-3.5).

Typically but not limited, the cationic monomer includes dimethyl diallyl ammonium chloride and acryloyloxyethyl trimethyl ammonium chloride, and a mass ratio of the two is 1:2.5, 1:2.8, 1:3.0, 1:3.2, 1:3.5 or a range value composed of any two numerical values.

In some examples, the coupling agent includes vinyltrimethoxysilane and/or 3-(methacryloyloxy)propyltrimethoxysilane.

In some examples, the anionic monomer includes one or more of methacrylic acid, itaconic acid, and fumaric acid. When the anionic monomer includes methacrylic acid and itaconic acid, a mass ratio of methacrylic acid to itaconic acid is 1:(2.5-3.5). Alternatively, when the anionic monomer includes methacrylic acid and fumaric acid, a mass ratio of methacrylic acid to fumaric acid is 1:(2.5-3.5).

Typically but not limited, when the anionic monomer includes methacrylic acid and itaconic acid, a mass ratio of the two is 1:2.5, 1:2.8, 1:3.0, 1:3.2, 1:3.5 or a range value composed of any two numerical values; and when the anionic monomer includes methacrylic acid and fumaric acid, a mass ratio of the two is 1:2.5, 1:2.8, 1:3.0, 1:3.2, 1:3.5 or a range value composed of any two numerical values.

In some examples, the chain transfer agent includes sodium hypophosphite and/or isopropanol.

In some examples, a ratio of the amount of substance of the cationic monomer to the coupling agent is 100:(20-35).

In some examples, a ratio of the amount of substance of the anionic monomer to the chain transfer agent is 100:(10-15).

Typical but non limiting, a ratio of the amount of substance of the cationic monomer to the coupling agent is 100:20, 100:28, 100:30, 100:32, 100:35 or a range value composed of any two numerical values; and a ratio of the amount of substance of the anionic monomer to the chain transfer agent is 100:10, 100:11, 100:12, 100:13, 100:14, 100:15 or a range value composed of any two numerical values.

In the technical solution of examples of the present disclosure, the polymerization of polymers formed by the cationic monomer in the first dispersant and the anionic monomer in the second dispersant is relatively rapid under redox reaction conditions, and there is a problem that some polymers are covered and buried by newly generated ferric phosphate, causing the polymers to lose its surfactant-like effect. Polymers formed by anionic monomers with different structures and cationic monomers with different structures have different reaction activities and reaction rates. Therefore, the anionic monomers can be selected from various types such as methyl acrylic acid, itaconic acid, and fumaric acid, or the cationic monomers can be selected from diallyl dimethyl ammonium chloride and acryloyloxyethyl trimethyl ammonium chloride, as is beneficial for making the polymers formed by the polymerization of the anionic monomers and the cationic monomers adsorbed at different rates on the surface of ferric phosphate, thereby improving the problem of polymers being covered and buried by newly generated ferric phosphate caused by the one-time formation of the polymers. For example, carboxyl groups in the anionic monomer bind with cations such as ferrous ions and iron ions, while cations in the cationic monomer bind with anions such as phosphates and adsorbed onto the surface of the obtained ferric phosphate, forming coating layer to disperse ferric phosphate particles and improve dispersion through electrostatic complexation.

For example, diallyl dimethyl ammonium chloride has two double bonds and four methyl groups. In this cationic monomer, the steric hindrance of the methyl groups reduces the electrostatic interaction between the cations of the cationic monomer and free phosphate ions, slowing down the adsorption and burial rate of polymer, which improves the dispersion effect, and ensures the proportion of cations in the polymers; the three methyl groups in acryloyloxyethyl trimethyl ammonium chloride also play a role in providing steric hindrance and promoting dispersion. After the chloride ion dissolves, the ammonium ion in the residual structure of acryloyloxyethyl trimethyl ammonium chloride carries a positive charge, which has electrostatic repulsion with ferrous ions, ferric ions, and other ammonium ions, that is conducive to retaining the ammonium ion and promoting long-lasting dispersion effect of acryloyloxyethyl trimethyl ammonium chloride; the combination of the above two is beneficial for improving the persistent dispersibility of the cations, controlling polymerization efficiency, ensuring the sufficient polymerization reaction between the anionic monomers and the cationic monomers, controlling the molecular weight of the polymers, and also improving the problem of the polymers formed by the anionic monomers and the cationic monomers being covered and buried by newly generated ferric phosphate in the first and/or second mixture, thereby playing a great dispersing role in the particles of ferric phosphate, maintaining the long-term stability of ferric phosphate particles, and further promoting the uniform growth of ferric phosphate particles.

For example, methacrylic acid has strong reactivity and will rapidly reacts with the cationic monomers at high concentrations to form polymers with excessive molecular weight, resulting in the inability to exert inhibitory effects. The inhibitory effect mainly refers to the inhibitory effect of the anions in the polymers that prevent the growth of ferric phosphate nuclei after the polymers adsorb on the surface of the nuclei. When the molecular weight of the polymers is too large, it is easy to disperse ferric phosphate particles, making them easier to grow and weakening the inhibitory effect of the polymers. Both itaconic acid and fumaric acid belong to dicarboxylic acids, and the polymerization rate of them with the cationic monomers is relatively slow. Therefore, when itaconic acid or fumaric acid is used in combination with methacrylic acid, it is beneficial to control the reaction rate of the anionic monomers and the cationic monomers forming the polymers and regulate the molecular structure of the polymers. At the same time, the strong chelation between the carboxyl anions of methacrylic acid and the ferrous and ferric ions on the surface of ferric phosphate crystal nuclei (based on surface energy electrostatic adsorption) can cause the carboxyl anions to be adsorbed and consumed too quickly. The slow release of anions from itaconic acid or fumaric acid is conducive to the sustained effect of chelation, and can be combined with the surfactant-like property formed by the combination of the cationic monomers and anionic monomers to reduce the surface tension of the solution and jointly controls the structure of ferric phosphate precursors to become spherical.

The cationic monomers and anionic monomers mentioned above are more conducive to the smooth polymerization of the polymers with the assistance of coupling agents and chain transfer agents. The polymers are surfactant-like. Firstly, the polymers play a role in dispersing ions. Specifically, after mixing the first mixture with the second mixture, some free ferrous ions, ferric ions, and phosphate ions bind to the carboxyl groups and amino groups in the cationic monomers and anionic monomers through electrostatic interactions, which is conducive to the uniform distribution of free ferrous ions and ferric ions and makes the above ions more easily bound with the polymerization of the anionic monomers and cationic monomers, making it easier to control the primary particle size of the generated ferric phosphate particles. Subsequently, the polymers formed by the cationic monomers and anionic monomers continue to disperse the crystal particles of ferric phosphate. At the same time, the polymers formed by the anionic monomers and cationic monomers further reduce surface tension of the solution, better promote the spherical growth of ferric phosphate crystals, and enhances the crystallinity of ferric phosphate crystals, which is beneficial for improving tap density and other properties of the resulting anhydrous ferric phosphate.

Further, in some examples, a ratio of the amount of substance of an iron element in the ferrous source to the first dispersant is 1:(0.0125-0.0150).

In some examples, a ratio of the amount of substance of an iron element in the ferrous source to a phosphorus element in the phosphorus source is 1:(0.9-1.1).

Typically but not limited, a ratio of the amount of substance of an iron element in the ferrous source to the first dispersant is 1:0.0125, 1:0.0130, 1:0.0135, 1:0.0140, 1:0.0145, 1:0.0150, or a range value composed of any two numerical values; and a ratio of the amount of substance of an iron element in the ferrous source to a phosphorus element in the phosphorus source is 1:0.9, 1:0.95, 1:1.0, 1:1.05, 1:1.1, or a range value composed of any two numerical values.

In some examples, a ratio of the amount of substance of a phosphorus element in the phosphorus source to the second dispersant is 1:(0.0150-0.0170).

Typically but not limited, a ratio of the amount of substance of a phosphorus element in the phosphorus source to the second dispersant is 1:0.0150, 1:0.0155, 1:0.0160, 1:0.0165, 1:0.0170, or a range value composed of any two numerical values.

In some examples, the ferrous source is prepared by the following method: mixing a by-product of titanium dioxide containing ferrous sulfate with water, heating and dissolving, adding an ammonia water with a mass fraction of 5%-15% for settling, filtering and retaining a filtrate to obtain the ferrous source.

In some examples, independently, the first phosphorus source and the second phosphorus source are prepared by the following method: dissolving monoammonium phosphate with phosphoric acid and water, filtering, and adding an ammonia water with a mass fraction of 5%-15% to an obtained filtrate to adjust a pH value of the obtained filtrate to 6-8.

In the technical solution of the example of the present disclosure, the ferric ions are formed by the oxidation of the ferrous ions using the first oxidant and/or the second oxidant, and the conversion rate of the reaction is affected by factors such as reactant concentration, temperature, and surface tension, thus the iron to phosphorus ratio of the obtained anhydrous ferric phosphate is less than 1. Under the above ratio conditions, it is more advantageous to use excessive phosphate ions to completely precipitate iron ions, and further enhance the binding force between the positive charge of cationic groups in the polymers formed by the anionic monomers and cationic monomers which are from cationic monomers and phosphate ions, as well as the binding force between the anionic groups in the polymers formed by the anionic monomers and cationic monomers which are from the anionic monomers and the iron ions, promoting the spherical growth of particles and playing a great role in particle size regulation.

Further, in some examples, the first oxidant includes hydrogen peroxide and/or sodium peroxide; and preferably, the first oxidant is added in the form of a first oxidant solution, with a mass fraction of 20%-30% in the first oxidant solution.

In some examples, a second oxidant includes hydrogen peroxide and/or sodium peroxide; and preferably, the second oxidant is added in the form of a second oxidant solution, with a mass fraction of 20%-30% in the second oxidant solution.

In some examples, a mass ratio of a first phosphorus source to a second phosphorus source is (15-25):(75-85).

Typically but not limited, a mass ratio of the first phosphorus source to the second phosphorus source is 15:85, 18:82, 20:80, 22:78, 25:75, or a range value composed of any two numerical values.

In some examples, a ratio of the amount of substance of the first oxidant to an iron element in the ferrous source is (0.6-1.1):1, and a ratio of the amount of substance of the second oxidant to an iron element in the ferrous source is (2.1-2.8):1.

Typically but not limited, a ratio of the amount of substance of the iron element in the ferrous source to the first oxidant is 1:0.6, 1:0.7, 1:0.8, 1:0.9, 1:1.0, 1:1.1, or a range value composed of any two numerical values; and a ratio of the amount of substance of the iron element in the ferrous source to the second oxidant is 1:2.1, 1:2.2, 1:2.5, 1:2.6, 1:2.8, or a range value composed of any two numerical values.

In the technical solution of the example of the present disclosure, the concentration of the ferric ions is controlled by the first oxidant and/or the second oxidant, and the concentration of the phosphates is controlled by the addition of the phosphorus source. The reaction rate is controlled from two aspects. The faster the reaction rate, the more crystal nuclei are generated and the smaller the crystal size; and the slower the reaction, the larger the crystal size, thus the particle size of ferric phosphate crystals is controlled. The oxidant mentioned above and concentrations of the reactants can jointly regulate the reaction rate to a more appropriate extent. By controlling the addition amount of the first phosphorus sources and the second phosphorus sources in step-by-step manner, the generation and growth of ferric phosphate can be controlled, further improving the particle size gradation and facilitating the further improvement of the sphericity, dispersibility and particle size gradation of anhydrous ferric phosphate.

Further, in some examples, in the first reaction treatment, a temperature is 40 °C-60 °C, and a time is 0.5 h-1 h; and/or, in the second reaction treatment, a temperature is 40 °C-60 °C, and a time is 5 min-10 min.

Typically but not limited, in the first reaction treatment, the temperature is 40 °C, 45 °C, 50 °C, 55 °C, 60 °C or a range value composed of any two numerical values, and the time is 0.5 h, 0.6 h, 0.7 h, 0.8 h, 0.9 h, 1 h or a range value composed of any two numerical values.

Typically but not limited, in the second reaction treatment, the temperature is 40 °C, 45 °C, 50 °C, 55 °C, 60 °C, or a range value composed of any two numerical values, and the time is 5 min, 6 min, 7 min, 8 min, 9 min, 10 min, or a range value composed of any two numerical values.

In the technical solution of the example of the present disclosure, the control of the above-mentioned reaction temperature and time can control the precipitation rate and dispersion effect of ferric phosphate by promoting the polymerization rate and degree of the cationic monomers and anionic monomers, and further improve the particle size gradation of the anhydrous ferric phosphate.

Further, in some examples, the step of adjusting a pH value and temperature of the second mixture, and undergoing a third reaction treatment to obtain the anhydrous ferric phosphate includes: adjusting a temperature of the second mixture to 40 °C-60 °C, controlling a pH value of the second mixture to 0.9-1.5, raising the temperature to 90 °C-95 °C, and reacting to the pH value of 1.6-2.0 to obtain a third mixture; and subjecting the third mixture sequentially to pressure filtration, rinsing, flash evaporation, drying, crushing, and sieving to obtain the anhydrous ferric phosphate. Preferably, the temperature is heated up to 90 °C-95 °C for a reaction time of 1.5 h-2.5 h, until a pH value reaches 1.6-2.0, to obtain a third mixture, which is beneficial for the complete reaction of the materials.

Typically but not limited, a temperature of the second mixture is adjusted to 40 °C, 45 °C, 50 °C, 55 °C, 60 °C, or a range value composed of any two numerical values. A pH value of the second mixture is controlled to 0.9-1.5. The second mixture is heated up to 90 °C-95 °C, and reacted until the pH value is 1.6-2.0 to obtain the third mixture.

In the technical solution of the example of the present disclosure, by adjusting the temperature and pH value of the second mixture within an appropriate range, the stable precipitation of ferric phosphate can be further controlled, and combined with pressure filtration, rinsing, flash evaporation, drying, crushing, and sieving, the anhydrous ferric phosphate with high sphericity, great dispersibility, and great particle size gradation as described earlier is prepared, making the preparation method more practical.

In some examples, the pH value of the second mixture is obtained by testing the solution portion in the second mixture.

In a third aspect, examples of the present disclosure provide a cathode electrode material, a general formula of the cathode electrode material is LiFe_{1-a-b-c}YₐCe_{b}M_{c}PO₄@C, wherein M is one or more of tin, titanium, boron, and manganese, a is 0.007-0.013, b is 0.029-0.057, and c is 0.01-0.033; and a mass fraction of C in the cathode electrode material is 1.2%-1.4%.

Typically but not limited, a formula in the cathode electrode materials is LiFe_{1-a-b-c}YₐCe_{b}M_{c}PO₄@C, a is 0.007, 0.008, 0.009, 0.010, 0.011, 0.012, 0.013 or a range value composed of any two numerical values, b is 0.029, 0.030, 0.035, 0.040, 0.045, 0.050, 0.055, 0.057 or a range value composed of any two numerical values, and c is 0.016, 0.020, 0.025, 0.030, 0.033 or a range value composed of any two numerical values; and a mass percentage of C in the cathode electrode material is 1.2%, 1.25%, 1.3%, 1.35%, 1.4%, or a range value composed of any two numerical values.

In some examples, a is preferably 0.008-0.012, b is preferably 0.03-0.052, and c is preferably 0.01-0.026.

In some examples, a mass fraction of C in the cathode electrode material is preferably 1.28%-1.34%.

In some examples, a chemical formula of a cathode electrode material can be expressed as at least one of LiFe_{0.912}Y_{0.012}Sn_{0.024}Ce_{0.052}PO₄@C, LiFe_{0.910}Y_{0.012}Ti_{0.026}Ce_{0.052}PO₄@C, LiFe_{0.94}Y_{0.012}Ti_{0.018}Ce_{0.05}PO₄@C, LiFe_{0.943}Y_{0.008}Ti_{0.016}Ce_{0.033}PO₄@C, LiFe_{0.936}Y_{0.01}Mn_{0.018}Ce_{0.036}PO₄@C, and LiFe_{0.94}Y_{0.01}Ce_{0.03}(PO₄)_{0.99}(BO₃)_{0.01}@C.

In the technical solution of examples of the present disclosure, the anhydrous ferric phosphate with great particle size gradation (which can be the anhydrous ferric phosphate as described above or the anhydrous ferric phosphate prepared by the preparation method of the anhydrous ferric phosphate as described above) is used as a key synthetic raw material, and due to its reasonable particle size distribution, high tap density, high compaction density and great particle packing density, the final prepared lithium iron phosphate has a relatively high compaction density. Simultaneously, three different mechanisms of action and doping ratios of metal cations for doping modification are combined, among which Y doping can suppress particle growth and avoid excessive particle growth leading to poor electrical performance; the valence of Ce is high, and the doping of which can significantly improve the lithium ion conductivity; and the valence of M (tin, titanium, boron, manganese) is close to that of Fe, which is beneficial for further improving the stability of the doped cathode electrode material. At the same time, the above-mentioned metal cations can combine with the phosphates in the anhydrous ferric phosphate to reduce the coarsening of crystal particles caused by the phosphate, ensuring the stability of the initial structure of ferric phosphate and the normal growth of crystal particles of the cathode electrode material under high metal element doping conditions, thereby giving the cathode electrode material advantages such as high compaction density, great rate performance, and high charging efficiency and discharging efficiency.

Further, in some examples, an average particle size of primary particles of the cathode electrode material is 0.24 µm-0.34 µm; a number fraction of primary particles with an average particle size greater than or equal to 1 µm in the cathode electrode material is less than or equal to 3.20%, and a compaction density is 2.52 g/cm³-2.64g/cm³. Preferably, a number fraction of the primary particle size less than or equal to 200 nm in the cathode electrode material is 32%-67%. Preferably, a number fraction of particles with an average primary particle size of 1 µm or more in the cathode electrode material is 0%-3.12%; and more preferably, a number fraction of particles with an average primary particle size of 1 µm or larger in the cathode electrode material is 0.93%-3.12%.

Typically but not limited, an average primary particle size of the cathode electrode material is 0.24 µm, 0.25 µm, 0.028 µm, 0.30 µm, 0.32 µm, 0.34 µm, or a range value composed of any two numerical values.

Typically but not limited, the compaction density of the cathode electrode material is 2.52 g/cm³, 2.55 g/cm³, 2.58 g/cm³, 2.60 g/cm³, 2.62 g/cm³, 2.64g/cm³, or a range value composed of any two numerical values.

In the technical solution of examples of the present disclosure, the principle of lithium iron phosphate charging and discharging is that lithium ions are embedded and removed under the action of voltage. The larger the lithium iron phosphate particles, the more difficult it is for lithium ions to be removed and inserted, resulting in a decrease in charging performance and discharging performance. Spherical particles are beneficial for ensuring the shortest path of lithium ions movement, reducing obstacles to lithium ions insertion and removal, and effectively improving charging performance and discharging performance. The raw material of the above-mentioned cathode electrode material in the present disclosure is anhydrous ferric phosphate with a matching of large and small particle sizes, which is beneficial for controlling the crystallization and growth process of lithium iron phosphate, further reducing the generation of large-particle single crystals in lithium iron phosphate, and thus making the cathode electrode material have excellent compaction density and energy storage performance.

In a fourth aspect, examples of the present disclosure provide a method for preparing a cathode electrode material, including the following steps:
mixing the above-mentioned anhydrous ferric phosphate of the present disclosure, a lithium source, a carbon source, a chelating agent, and a dopant with water to obtain a mixed material;
sintering the mixed material under a protective atmosphere to obtain the cathode electrode material; and
the dopant includes yttrium oxide, cerium oxide, and other compounds containing oxygens, and the other compounds containing oxygens include one or more of tin oxide, titanium oxide, boron oxide, and compounds containing manganese and oxygen.

In the technical solution of examples of the present disclosure, the higher the sphericity of the anhydrous ferric phosphate particles used, the more the particle size distribution tends to be normally distributed, the higher the packing density, and the higher the compaction density. The process of preparing lithium iron phosphate mainly involves embedding lithium ions and doping elements into the ferric phosphate through sintering treatment. Under high temperature conditions, the ferric phosphate particles will also grow, so the morphology and particle distribution of the anhydrous ferric phosphate directly determine the particle morphology and particle size distribution of lithium iron phosphate.

The present disclosure uses the anhydrous ferric phosphate with high crystallinity, low impurity content, excellent particle size distribution, high sphericity, high packing density, and high compaction density (which can be the anhydrous ferric phosphate as described above or obtained by the preparation method of the anhydrous ferric phosphate as described above) as the raw material, and then controls the crystallization and growth process of lithium iron phosphate, significantly reducing the generation of large-particle single crystals in highly compacted lithium iron phosphate. During the crystallization and growth process of lithium iron phosphate, the chelating agent plays an inhibitory role before carbon coating, effectively avoiding the formation of crystal nuclei and reducing the generation of ineffective single crystals during the growth process of lithium iron phosphate particles. On the one hand, it ensures the effective proportion of high-efficiency lithium iron phosphate, and improves the compaction density; and on the other hand, it ensures great carbon coating effect and low powder internal resistance of lithium iron phosphate, reduces polarization, and thus exhibits excellent charging performance, discharging performance and long-lasting cycling performance.

Further, in some examples, the chelating agent includes glycerol and/or sodium gluconate; and/or, the dopant includes yttrium oxide, cerium oxide, and other compounds containing oxygens, wherein the other compounds containing oxygens include one or more of tin dioxide, titanium dioxide, boron trioxide, and manganese carbonate; preferably, a mass ratio of the yttrium oxide, the cerium oxide, and the other compounds containing oxygens is 1:(2-3):(1-2); and/or, a mass ratio of the anhydrous ferric phosphate to the chelating agent is 1:(0.02-0.03); and/or, a mass ratio of the anhydrous ferric phosphate to the dopant is 1:(0.008-0.009); and/or, a ratio of the amount of substance of the anhydrous ferric phosphate to the lithium source is 1:(1-1.05); and/or, a mass ratio of the anhydrous ferric phosphate to the carbon source is 1:(0.09-0.11).

Typically but not limited, a mass ratio of yttrium oxide to cerium oxide is 1:2, 1:2.2, 1:2.5, 1:2.8, 1:3, or a range value composed of any two numerical values; and a mass ratio of yttrium oxide to other compounds containing oxygens is 1:1, 1:1.2, 1:1.5, 1:1.8, 1:2, or a range value composed of any two numerical values.

Typically but not limited, a mass ratio of the anhydrous ferric phosphate to the chelating agent is 1:0.02, 1:0.022, 1:0.025, 1:0.028, 1:0.03, or a range value composed of any two numerical values.

Typically but not limited, a mass ratio of the anhydrous ferric phosphate to the dopant is 1:0.008, 1:0.0082, 1:0.0085, 1:0.0088, 1:0.009, or a range value composed of any two numerical values.

Typically but not limited, a ratio of the amount of substance of the anhydrous ferric phosphate to the lithium source is 1:1, 1:1.01, 1:1.02, 1:1.03, 1:1.04, 1:1.05, or a range value composed of any two numerical values.

Typically but not limited, a mass ratio of the anhydrous ferric phosphate to the carbon source is 1:0.09, 1:0.095, 1:0.10, 1:0.105, 1:0.11 or a range value composed of any two numerical values.

In the technical solution of examples of the present disclosure, glycerol or sodium gluconate is selected as the chelating agent, and during the sintering process, it binds to the active sites of the raw material through strong polarity, thereby inhibiting the formation of crystal nuclei, reducing the generation of lithium iron phosphate single crystals, improving the purity of lithium iron phosphate, and thus enhancing the electrical performance of the cathode electrode material. By controlling the ratio of each raw material within the above-mentioned range, the synthesis of lithium iron phosphate is more complete, thereby reducing raw material waste and further reducing preparation costs while maintaining excellent electrical performance of the cathode electrode material.

Further, in some examples, the step of sintering the mixed material under a protective atmosphere to obtain the cathode electrode material includes: grinding the mixed material to obtain a ground material, and a D50 particle size of the ground material is 0.38 µm-0.42 µm; conducting spray drying on the ground material to obtain a sprayed material, and a D50 particle size of the sprayed material is 3.4 µm-6.7 µm; sintering the sprayed material under the protective atmosphere to obtain the cathode electrode material; and preferably, in the sintering, a temperature is 760 °C-820 °C and a time is 10 h-18 h.

Typically but not limited, a D50 particle size of the grinding material is 0.38 µm, 0.39 µm, 0.40 µm, 0.41 µm, 0.42 µm, or a range value composed of any two numerical values; and a D50 particle size of a spray material is 3.4 µm, 3.5 µm, 4.0 µm, 4.5 µm, 5.0 µm, 5.5 µm, 6.0 µm, 6.5 µm, 6.7 µm or a range value composed of any two numerical values.

Typically but not limited, the sintering temperature is 760 °C, 770 °C, 780 °C, 790 °C, 800 °C, 810 °C, 820 °C or a range value composed of any two numerical values, and the time is 10 h, 12 h, 15 h, 16 h, 18 h or a range value composed of any two numerical values.

In some examples, the protective atmosphere is achieved through a protective gas. The protective gas can be selected from at least one of nitrogen and argon.

In the technical solution of examples of the present disclosure, the anhydrous ferric phosphate has high sphericity, great particle gradation, small particle size of the product of grinding and spray drying, which is conducive to further reducing the grinding and spray drying time, further reducing production energy consumption and improving production efficiency on the premise of ensuring the particle size and performance of the obtained lithium iron phosphate. By controlling the sintering temperature within appropriate range, on the one hand, the compaction density is increased, the diffusion rate of lithium ions can be increased, and on the other hand, the proportion and polarization of single crystal lithium iron phosphate is reduced, resulting in better electrochemical performance of the cathode electrode material.

In a fifth aspect, examples of the present disclosure provide a cathode electrode sheet, including a cathode electrode current collector and a cathode electrode active layer arranged on at least one side of the cathode electrode current collector. The cathode electrode active layer includes the above-mentioned cathode electrode material.

In these examples, the cathode electrode sheet contains the above-mentioned cathode electrode material, thus having the advantages of great rate performance and high charging efficiency and discharging efficiency.

In a sixth aspect, examples of the present disclosure provide a secondary battery, including the above-mentioned cathode electrode sheet.

In these examples, the secondary battery contains the above-mentioned cathode electrode sheet, thus having the advantages of great rate performance and high charging efficiency and discharging efficiency.

Some specific examples are listed below. It should be noted that the examples described below are exemplary and are only intended to explain the present disclosure, which cannot be understood as limitations to the present disclosure. If no specific technology or conditions are indicated in the examples, the technology or conditions described in the literature in the art or the product specification shall be followed. The reagents or instruments used without specifying the manufacturer are conventional products that can be obtained through commercial purchase.

### I. Preparation method

### Example 1

This example provided a preparation method of anhydrous ferric phosphate and a cathode electrode material. The specific steps of the preparation method were as follows:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 1.5 mol/L and a pH value of 2.8;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.010 mol of diallyl dimethyl ammonium chloride and 0.0028 mol of vinyltrimethoxysilane were mixed to prepare a solution A, 0.015 mol of methacrylic acid and 0.0015 mol of isopropanol were mixed to prepare a solution B, and stirred evenly; and
   4) based on 1 mol of iron (i.e., using a solution containing 1 mol of ferrous ions as a reference, the same applied later), a ferrous source was mixed with solution A firstly, and added into a reaction kettle as a bottom material, then 15% of 1 mol of a phosphorus source solution (i.e., a phosphorus source solution containing 1 mol of PO₄³⁻, the same applied later) was mixed with solution B, and 20% of 3.2 mol of hydrogen peroxide solution were added slowly simultaneously for a synthesis reaction, stirred at 50 °C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.2 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, yttrium oxide, tin dioxide and cerium oxide with a mass ratio of 1:2:3 and accounting for 0.86% of a mass of the anhydrous ferric phosphate, glycerol and soluble starch with a mass ratio of 1:4 and accounting for 11.8% of a mass of the anhydrous ferric phosphate, were added with pure water, stirred and mixed to form a slurry with a solid content of 48.0%, and spray dried at a temperature higher than 215°C after adjusting a D50 particle size to 0.38 µm through sanding to control a D50 particle size to 3.4 µm; and then, under a nitrogen protective atmosphere, the slurry was heated up to 786°C at a rate of 5°C/min, held for 12 h, cooled down to below 100°C by air cooling, removed from the furnace, and crushed to obtain a lithium iron phosphate cathode electrode material.

### Example 2

This example provided a preparation method of anhydrous ferric phosphate and a cathode electrode material. The specific steps of the preparation method were as follows:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.2;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.012 mol of diallyl dimethyl ammonium chloride in a mass ratio of 1:3 with acryloyloxyethyl trimethyl ammonium chloride and 0.0028 mol of 3-(methacryloyloxy)propyl trimethoxysilane were mixed to prepare solution A. 0.015 mol of methyl acrylic acid in a mass ratio of 1:3 with fumaric acid was mixed with 0.0019 mol of sodium hypophosphite to prepare solution B, and stirred well; and
   4) based on 1 mol of iron, a ferrous source was mixed with solution A firstly, and added into a reaction kettle as a bottom material, then 20% of 1 mol of phosphorus source solution was mixed with solution B, and 20% of 3.2 mol of hydrogen peroxide solution were added slowly simultaneously for a synthesis reaction, stirred at 50 °C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.2 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, yttrium oxide, tin dioxide and cerium oxide with a mass ratio of 1:2:3 and accounting for 0.86% of a mass of the anhydrous ferric phosphate, glycerol and soluble starch with a mass ratio of 1:4 and accounting for 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.38 µm through sanding to control a D50 particle size to 5 µm; and then, under a nitrogen protective atmosphere, the slurry was heated up to 786 °C at a rate of 5 °C/min, held for 12 h, cooled down to below 100 °C by air cooling, removed from the furnace, and crushed to obtain a lithium iron phosphate cathode electrode material.

### Example 3

This example provided a preparation method of anhydrous ferric phosphate and a cathode electrode material. The specific steps of the preparation method were as follows:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
   4) based on 1 mol of iron, a ferrous source was mixed with solution A firstly, and added into a reaction kettle as a bottom material, then 25% of 1 mol of phosphorus source solution was mixed with solution B, and 20% of 3.4 mol of hydrogen peroxide solution were added slowly simultaneously for a synthesis reaction, stirred at 50 °C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, and the obtained third mixture was subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, yttrium oxide, tin dioxide and cerium oxide with a mass ratio of 1:2:3 and accounting for 0.86% of a mass of the anhydrous ferric phosphate, glycerol and soluble starch with a mass ratio of 1:4 and accounting for 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.38 µm through sanding to control a D50 particle size to 6.7 µm; and then, under a nitrogen protective atmosphere, the slurry was heated up to 786 °C at a rate of 5 °C/min, held for 12 h, cooled down to below 100 °C by air cooling, removed from the furnace, and crushed to obtain a lithium iron phosphate cathode electrode material.

### Example 4

This example provided a preparation method of anhydrous ferric phosphate and a cathode electrode material. The specific steps of the preparation method were as follows:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
   4) based on 1 mol of iron, a ferrous source was mixed with solution A firstly, and added into a reaction kettle as a bottom material, then 25% of 1 mol of phosphorus source solution was mixed with solution B, and 20% of 3.4 mol of hydrogen peroxide solution were added slowly simultaneously for a synthesis reaction, stirred at 50°C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, and subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 1:2:3 and accounting for 0.86% of a mass of the anhydrous ferric phosphate, glycerol and β-cyclodextrin with a mass ratio of 1:4 and accounting for 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.40 µm through sanding to control a D50 particle size to 6.7 µm; and then, under a nitrogen protective atmosphere, the slurry was heated up to 786 °C at a rate of 5 °C/min, held for 16 h, cooled down to below 100 °C by air cooling, removed from the furnace, and crushed to obtain a lithium iron phosphate cathode electrode material.

### Example 5

This example provided a preparation method of anhydrous ferric phosphate and a cathode electrode material. The specific steps of the preparation method were as follows:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
   4) based on 1 mol of iron, a ferrous source was mixed with solution A firstly, and added into a reaction kettle as a bottom material, then 25% of 1 mol of phosphorus source solution was mixed with solution B, and 20% of 3.4 mol of hydrogen peroxide solution were added slowly simultaneously for a synthesis reaction, stirred at 50 °C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, and subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 2:3:5 and accounting for 0.83% of a mass of the anhydrous ferric phosphate, glycerol and β-cyclodextrin with a mass ratio of 1:4 and accounting for 12.7% of a mass of the anhydrous ferric phosphate, were added with pure water, stirred and mixed to form a slurry with a solid content of 48.0%, and spray dried at a temperature higher than 215 °C after adjusting a D50 particle size to 0.42 µm through sanding to control a D50 particle size to 4.5 µm; and then, under a nitrogen protective atmosphere, the slurry was heated up to 788 °C at a rate of 5 °C/min, held for 14 h, cooled down to below 100 °C by air cooling, removed from the furnace, and crushed to obtain a lithium iron phosphate cathode electrode material.

### Example 6

This example provided a preparation method of anhydrous ferric phosphate and a cathode electrode material. The specific steps of the preparation method were as follows:
Step 1:
   1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
   4) based on 1 mol of iron, a ferrous source was mixed with solution A firstly, and added into a reaction kettle as a bottom material, then 25% of 1 mol of phosphorus source solution was mixed with solution B, and 20% of 3.4 mol of hydrogen peroxide solution were added slowly simultaneously for a synthesis reaction, stirred at 50 °C for half an hour after adding dropwise, then added with the remaining phosphorus source at once, further stirred at 50 °C for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, and subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 2:3:5 and accounting for 0.83% of a mass of the anhydrous ferric phosphate, glycerol and β-cyclodextrin with a mass ratio of 1:4 and accounting for 13.2% of a mass of the anhydrous ferric phosphate, were added with pure water, stirred and mixed to form a slurry with a solid content of 48.0%, and spray dried at a temperature higher than 215 °C after adjusting a D50 particle size to 0.40 µm through sanding to control a D50 particle size to 4.5 µm; and then, under a nitrogen protective atmosphere, the slurry was heated up to 790 °C at a rate of 5 °C/min, held for 14 h, cooled down to below 100 °C by air cooling, removed from the furnace, and crushed to obtain a lithium iron phosphate cathode electrode material.

### Example 7

The difference from Example 5 was that in step 1: 3) preparation of a dispersant: 0.0105 mol of diallyl dimethyl ammonium chloride in a mass ratio of 1:2.5 with acryloyloxyethyl trimethyl ammonium chloride and 0.0021 mol of 3-(methacryloyloxy)propyl trimethoxysilane were mixed to prepare solution A. 0.014 mol of methyl acrylic acid in a mass ratio of 1:2.5 with itaconic acid was mixed with 0.0014 mol of sodium hypophosphite to prepare solution B, and stirred well.

### Example 8

The difference from Example 5 was that in step 1: 3) preparation of a dispersant: 0.011 mol of diallyl dimethyl ammonium chloride in a mass ratio of 1:3.5 with acryloyloxyethyl trimethyl ammonium chloride and 0.0039 mol of vinyltrimethoxysilane were mixed to prepare solution A. 0.0145 mol of methyl acrylic acid in a mass ratio of 1:3.5 with fumaric acid was mixed with 0.0022 mol of isopropanol to prepare solution B, and stirred well.

### Example 9

The difference from Example 5 was that in step 1:
1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
4) based on 1 mol of iron, a ferrous source was mixed with solution A firstly, and added into a reaction kettle as a bottom material, then 15% of 1 mol of phosphorus source solution was mixed with solution B, and 18% of 3.4 mol of hydrogen peroxide solution were added slowly simultaneously for a synthesis reaction, stirred at 40 °C for 1 h after adding dropwise, then added with the remaining phosphorus source at once, further stirred at 40 °C for 10 min, and slowly added with the remaining hydrogen peroxide solution while maintaining the reaction temperature not exceeding 40 °C, adjusted until a pH value to 0.9 with phosphoric acid after adding dropwise, then heated up to 90 °C and further stirred for 2.5 h until the pH value was 1.6, and subjected to pressure filtration, rinsing, flash evaporation, drying, crushing, and sieving to obtain the anhydrous ferric phosphate.

### Example 10

The difference from Example 5 was that in step 1:
1) a by-product of titanium dioxide containing ferrous sulfate was mixed with water, heated and dissolved, an ammonia water with a mass fraction of 15% was added for settling, and subjected to pressure filtration and impurity removal to obtain a ferrous solution with a ferrous ion mass fraction of 2 mol/L and a pH value of 3.0;
2) preparation of a phosphorus source: industrial monoammonium phosphate was dissolved and filtered with phosphoric acid and water, and then a pH value was adjusted to neutral by adding an ammonia water with a mass fraction of 15% to obtain a phosphorus source solution with a PO₄³⁻ content of 2 mol/L;
3) preparation of a dispersant: 0.01 mol of diallyl dimethyl ammonium chloride in a mass ratio of 1:3 with acryloyloxyethyl trimethyl ammonium chloride and 0.0031 mol of vinyltrimethoxysilane were mixed to prepare solution A. 0.014 mol of methyl acrylic acid in a mass ratio of 1:3 with itaconic acid was mixed with 0.0017 mol of sodium hypophosphite to prepare solution B, and stirred well; and
4) based on 1 mol of iron, a ferrous source was mixed with solution A firstly, and added into a reaction kettle as a bottom material, then 25% of 1 mol of phosphorus source solution was mixed with solution B, and 30% of 3.4 mol of hydrogen peroxide solution were added slowly simultaneously for a synthesis reaction, stirred at 60 °C for half an hour after adding dropwise, then added with the remaining phosphorus source at once, further stirred at 60 °C for 5 min, and slowly added with the remaining hydrogen peroxide solution while maintaining the reaction temperature not exceeding 60 °C, adjusted until a pH value to 1.5 with phosphoric acid after adding dropwise, then heated up to 95 °C and further stirred for 1.5 h until the pH value was 2.0, and subjected to pressure filtration, rinsing, flash evaporation, drying, crushing, and sieving to obtain the anhydrous ferric phosphate.

### Example 11

The difference from Example 5 was that in step 2:
the anhydrous ferric phosphate prepared in Step 1, lithium carbonate of 1 time of the amount of substance of the anhydrous ferric phosphate, yttrium oxide, titanium dioxide and cerium oxide with a mass ratio of 1:1:2 and accounting for 0.8% of a mass of the anhydrous ferric phosphate, glycerol and β-cyclodextrin with a mass ratio of 1:4 and accounting for 11.3% of a mass of the anhydrous ferric phosphate, were added with pure water, stirred and mixed to form a slurry with a solid content of 48.0%, and spray dried at a temperature higher than 215 °C after adjusting a D50 particle size to 0.42 µm through sanding to control a D50 particle size to 4.5 µm; and then, under a nitrogen protective atmosphere, the slurry was heated up to 760 °C at a rate of 5 °C/min, held for 18 h, cooled down to below 100 °C by air cooling, removed from the furnace, and crushed to obtain a lithium iron phosphate cathode electrode material.

### Example 12

The difference from Example 5 was that in step 2:
the anhydrous ferric phosphate prepared in Step 1, lithium carbonate of 1.05 times of the amount of substance of the anhydrous ferric phosphate, yttrium oxide, manganese carbonate and cerium oxide with a mass ratio of 1:2:3 and accounting for 0.9% of a mass of the anhydrous ferric phosphate, sodium gluconate and β-cyclodextrin with a mass ratio of 1:4 and accounting for 13.6% of a mass of the anhydrous ferric phosphate, were added with pure water, stirred and mixed to form a slurry with a solid content of 48.0%, and spray dried at a temperature higher than 215 °C after adjusting a D50 particle size to 0.42 µm through sanding to control a D50 particle size to 4.5 µm; and then, under a nitrogen protective atmosphere, the slurry was heated up to 820 °C at a rate of 5 °C/min, held for 10 h, cooled down to below 100 °C by air cooling, removed from the furnace, and crushed to obtain a lithium iron phosphate cathode electrode material.

### Example 13

The difference from Example 5 was that in step 2:
the anhydrous ferric phosphate prepared in Step 1, lithium carbonate of 1.03 times of the amount of substance of the anhydrous ferric phosphate, yttrium oxide, diboron trioxide and cerium oxide with a mass ratio of 1:1:3 and accounting for 0.83% of a mass of the anhydrous ferric phosphate, glycerol and β-cyclodextrin with a mass ratio of 1:4 and accounting for 13.2% of a mass of the anhydrous ferric phosphate, were added with pure water, stirred and mixed to form a slurry with a solid content of 48.0%, and spray dried at a temperature higher than 215 °C after adjusting a D50 particle size to 0.40 µm through sanding to control a D50 particle size to 4.5 µm; and then, under a nitrogen protective atmosphere, the slurry was heated up to 790 °C at a rate of 5°C/min, held for 14 h, cooled down to below 100 °C by air cooling, removed from the furnace, and crushed to obtain a lithium iron phosphate cathode electrode material.

### Comparative Example 1

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 1.5 mol/L and a pH value of 2.8;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then a phosphorus source solution and 3.2 mol of hydrogen peroxide solution were added slowly simultaneously for a synthesis reaction, ensuring that the dropwise addition was completed within 1 h while maintaining the reaction temperature not exceeding 60°C, adjusted until a pH value to 1.2 with phosphoric acid after adding dropwise, then heated up to 95°C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, titanium dioxide of 0.86% of a mass of anhydrous ferric phosphate and glucose monohydrate of 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.38 µm through sanding to control a D50 particle size to 4.5 µm; and then, under a nitrogen protective atmosphere, the slurry was heated up to 786 °C at a rate of 5 °C/min, held for 12 h, cooled down to below 100 °C by air cooling, removed from the furnace, and crushed to obtain a lithium iron phosphate cathode electrode material.

### Comparative Example 2

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.2;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then 20% of 1 mol of phosphorus source solution and 20% of 3.2 mol of hydrogen peroxide solution were added slowly simultaneously for a synthesis reaction, stirred for half an hour after adding dropwise, then added with the remaining phosphorus source at once, further stirred for 5 min, and slowly added with the remaining hydrogen peroxide solution while maintaining the reaction temperature not exceeding 60 °C, adjusted until a pH value to 1.2 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, titanium dioxide of 0.86% of a mass of anhydrous ferric phosphate and glucose monohydrate of 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.38 µm through sanding to control a D50 particle size to 4.5 µm; and then, under a nitrogen protective atmosphere, the slurry was heated up to 786 °C at a rate of 5 °C/min, held for 12 h, cooled down to below 100 °C by air cooling, removed from the furnace, and crushed to obtain a lithium iron phosphate cathode electrode material.

### Comparative Example 3

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then 25% of 1 mol of phosphorus source solution and 20% of 3.4 mol of hydrogen peroxide solution were added slowly simultaneously for a synthesis reaction, stirred for half an hour after adding dropwise, then added with the remaining phosphorus source at once, further stirred for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.02 times of the amount of substance of the anhydrous ferric phosphate, titanium dioxide of 0.86% of a mass of anhydrous ferric phosphate and glucose monohydrate of 11.8% of a mass of the anhydrous ferric phosphate, were added with pure water, stirred and mixed to form a slurry with a solid content of 48.0%, and spray dried at a temperature higher than 215 °C after adjusting a D50 particle size to 0.38 µm through sanding to control a D50 particle size to 4.5 µm; and then, under a nitrogen protective atmosphere, the slurry was heated up to 786 °C at a rate of 5 °C/min, held for 12 h, cooled down to below 100 °C by air cooling, removed from the furnace, and crushed to obtain a lithium iron phosphate cathode electrode material.

### Comparative Example 4

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then 25% of 1 mol of phosphorus source solution and 20% of 3.4 mol of hydrogen peroxide solution were added slowly simultaneously for a synthesis reaction, stirred for half an hour after adding dropwise, then added with the remaining phosphorus source at once, further stirred for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 1:2:3 and accounting for 0.86% of a mass of the anhydrous ferric phosphate, glycerol and β-cyclodextrin with a mass ratio of 1:4 and accounting for 11.8% of a mass of the anhydrous ferric phosphate, were added with pure water, stirred and mixed to form a slurry with a solid content of 48.0%, and spray dried at a temperature higher than 215°C after adjusting a D50 particle size to 0.40 µm through sanding to control a D50 particle size to 4.5 µm; and then, under a nitrogen protective atmosphere, the slurry was heated up to 786 °C at a rate of 5 °C/min, held for 16 h, cooled down to below 100 °C by air cooling, removed from the furnace, and crushed to obtain a lithium iron phosphate cathode electrode material.

### Comparative Example 5

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then 25% of 1 mol of phosphorus source solution and 20% of 3.4 mol of hydrogen peroxide solution were added slowly simultaneously for a synthesis reaction, stirred for half an hour after adding dropwise, then added with the remaining phosphorus source at once, further stirred for 5 min, and slowly added with the remaining hydrogen peroxide solution while maintaining the reaction temperature not exceeding 60°C, adjusted until a pH value to 1.0 with phosphoric acid after adding dropwise, then heated up to 95°C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 2:3:5 and accounting for 0.83% of a mass of the anhydrous ferric phosphate, glycerol and β-cyclodextrin with a mass ratio of 1:4 and accounting for 12.7% of a mass of the anhydrous ferric phosphate, were added with pure water, stirred and mixed to form a slurry with a solid content of 48.0%, and spray dried at a temperature higher than 215 °C after adjusting a D50 particle size to 0.42 µm through sanding to control a D50 particle size to 4.5 µm; and then, under a nitrogen protective atmosphere, the slurry was heated up to 788 °C at a rate of 5 °C/min, held for 14 h, cooled down to below 100 °C by air cooling, removed from the furnace, and crushed to obtain a lithium iron phosphate cathode electrode material.

### Comparative Example 6

This comparative example provided a preparation method of anhydrous ferric phosphate and a cathode electrode material, which was prepared by the following method:
Step 1: 1) a by-product of titanium dioxide containing ferrous sulfate was mixed with water, heated and dissolved, an ammonia water with a mass fraction of 5% was added for settling, and subjected to pressure filtration and impurity removal to obtain a ferrous solution with a ferrous ion mass fraction of 2 mol/L and a pH value of 3.0;
   2) preparation of a phosphorus source: industrial monoammonium phosphate was dissolved and filtered with phosphoric acid and water, and then a pH value was adjusted to neutral by adding an ammonia water with a mass fraction of 5% to obtain a phosphorus source solution with a PO₄³⁻ content of 2 mol/L;
   3) based on 1 mol of iron, a ferrous source was firstly added into a reaction kettle as a bottom material, then 25% of 1 mol of phosphorus source solution and 20% of 3.4 mol of hydrogen peroxide solution were added slowly simultaneously for a synthesis reaction, stirred for half an hour after adding dropwise, then added with the remaining phosphorus source at once, further stirred for 5 min, and slowly added with the remaining hydrogen peroxide solution while maintaining the reaction temperature not exceeding 60 °C, adjusted until a pH value to 1.0 with phosphoric acid after adding dropwise, then heated up to 95 °C and further stirred for 2 h until the pH value was 1.8, subjected to pressure filtration, rinsing, flash evaporation, drying, crushing, and sieving to obtain the anhydrous ferric phosphate.
Step 2: the anhydrous ferric phosphate prepared in Step 1, lithium carbonate of 1.03 times of the amount of substance of the anhydrous ferric phosphate, yttrium oxide, titanium dioxide and cerium oxide with a mass ratio of 2:3:5 and accounting for 0.83% of a mass of the anhydrous ferric phosphate, glycerol and β-cyclodextrin with a mass ratio of 1:4 and accounting for 13.2% of a mass of the anhydrous ferric phosphate, were added with pure water, stirred and mixed to form a slurry with a solid content of 48.0%, and spray dried at a temperature higher than 215°C after adjusting a D50 particle size to 0.40 µm through sanding to control a D50 particle size to 4.5 µm; and then, under a nitrogen protective atmosphere, the slurry was heated up to 790 °C at a rate of 5 °C/min, held for 14 h, cooled down to below 100 °C by air cooling, removed from the furnace, and crushed to obtain a lithium iron phosphate cathode electrode material.

### II. Testing method

### 1. Testing of anhydrous ferric phosphate and cathode electrode material property

1) SEM testing: a particle size and distribution were analyzed using a Nano Measurer software by a scanning electron microscopy analysis of a JSM6390 scanning electron microscope.
2) XRD testing: a composition and content of a phase in a sample were determined using an X-ray diffraction analysis (XRD). This experiment used an Empyrean Ruiying rotating anode X-ray diffractometer from PANalytical, a Dutch company.
3) Sphericity: an overall particle distribution from elliptical to spherical was observed according to an SEM image, and the sphericity was calculated (the sphericity of a tetrahedra was 0.908, and the sphericity of a sphere was 1).
4) Tap density: tested using a tap density meter with a vibration frequency of 5000 times.
5) Compaction density testing: tested using a compaction density meter, with a testing pressure of 3 T and a pressing time of 30 s.
6) Iron to phosphorus ratio: the content of iron element was determined by a potassium dichromate method, and the content of phosphorus element was determined by a quinoline phosphomolybdate weighing method. The iron to phosphorus ratio was a ratio of the amount of substance of iron element to phosphorus element.
7) BET specific surface area: using a Maike surface analyzer (TriStar II 3020, micromeritics), using nitrogen as an adsorbate and helium or hydrogen as a carrier gas, the two gases were mixed in a certain proportion to reach a specified relative pressure, and then flowed through a solid material. By changing a mixing ratio of nitrogen and carrier gas, an adsorption capacity of several nitrogens under relative pressure could be measured, and a specific surface area could be calculated based on a BET specific surface area formula. 2 g of a sample was degassed and dried at 120 °C for 2 h before being tested in a Dewar flask filled with liquid nitrogen.
8) Carbon content testing: an infrared carbon sulfur analyzer, model HCS-140, Shanghai Dekai Instrument Co., Ltd.

### 2. Testing of secondary battery property

Lithium iron phosphate gram capacity testing: tested by testing system from Wuhan Land Electronics Co., Ltd, a prepared material was used as a cathode electrode material, acetylene black as a conductive agent, polytetrafluoroethylene as a binder, electrode sheets were made in a mass ratio of 90:5:5, and assembled into a CR2032 button type battery using metal lithium as an anode. 1C charging and discharging in an environment of 2 V-3.75 V, 25 °C ± 0.5 °C was tested, and 1P constant power charging and discharging in an environment of 2.5 V-3.75 V, 25 °C ± 0.5 °C was tested.

### III. Analysis of test results for various examples and comparative examples

The tap density and lithium iron phosphate compaction density data of the anhydrous ferric phosphate prepared in the examples and comparative examples were shown in Tables 1 and 2, and the electrochemical performance test results were shown in Table 3.

**Table 1**

| Anhydrous ferric phosphate | Primary particle size distribution (percentage of quantity) | | | | Sphericity | Tap density , g/cm³ | Compaction density, g/cm³ | Iron to phosphorus ratio | BET specific surface area, m²/g |
|---|---|---|---|---|---|---|---|---|---|
| | Greater than or equal to 0.01 µm and less than 0.1 µm | 0.1 µm-0.2 µm | Greater than 0.2 µm and less than 0.4 µm | 0.4 µm-0.6 µm | | | | | |
| Example 1 | 21.03 | 58.29 | 17.98 | 2.71 | 0.98 | 0.95 | 1.58 | 0.966 | 9.37 |
| Example 2 | 18.46 | 59.37 | 23.66 | 1.49 | 0.98 | 0.96 | 1.59 | 0.965 | 9.36 |
| Example 3 | 16.52 | 54.96 | 24.78 | 3.74 | 0.98 | 1.04 | 1.61 | 0.963 | 8.79 |
| Example 4 | 15.33 | 56.27 | 24.93 | 3.47 | 0.98 | 1.06 | 1.61 | 0.963 | 8.65 |
| Example 5 | 15.04 | 55.75 | 25.76 | 3.53 | 0.98 | 1.06 | 1.61 | 0.963 | 8.93 |
| Example 6 | 15.28 | 54.73 | 23.31 | 6.68 | 0.98 | 1.05 | 1.61 | 0.963 | 8.85 |
| Example 7 | 13.27 | 54.23 | 24.90 | 7.46 | 0.96 | 1.02 | 1.59 | 0.965 | 8.53 |
| Example 8 | 18.03 | 57.29 | 24.68 | 0.71 | 0.96 | 0.98 | 1.57 | 0.964 | 9.64 |
| Example 9 | 22.45 | 58.46 | 18.79 | 0.30 | 0.96 | 0.93 | 1.57 | 0.957 | 10.8 |
| Example 10 | 17.64 | 56.37 | 22.78 | 3.21 | 0.96 | 1.03 | 1.60 | 0.962 | 9.03 |
| Example 11 | 16.04 | 55.95 | 24.76 | 3.59 | 0.96 | 0.94 | 1.57 | 0.963 | 9.43 |
| Example 12 | 17.84 | 56.75 | 26.76 | 3.13 | 0.96 | 0.93 | 1.57 | 0.963 | 9.52 |
| Example 13 | 17.46 | 55.37 | 25.66 | 1.51 | 0.97 | 1.03 | 1.59 | 0.967 | 9.16 |
| Comparative Example 1 | 23.58 | 62.05 | 13.92 | 0.45 | 0.8 | 0.85 | 1.56 | 0.966 | 11.26 |
| Comparative Example 2 | 23.12 | 60.55 | 15.78 | 0.55 | 0.8 | 0.87 | 1.56 | 0.965 | 11.08 |
| Comparative Example 3 | 21.44 | 57.79 | 22.68 | 1.91 | 0.8 | 0.92 | 1.57 | 0.963 | 10.96 |
| Comparative Example 4 | 21.44 | 57.79 | 22.68 | 1.91 | 0.8 | 0.92 | 1.57 | 0.963 | 10.90 |
| Comparative Example 5 | 21.44 | 57.79 | 22.68 | 1.91 | 0.8 | 0.93 | 1.57 | 0.963 | 10.97 |
| Comparative Example 6 | 21.44 | 57.79 | 22.68 | 1.91 | 0.8 | 0.92 | 1.57 | 0.963 | 11.03 |

**Table 2**

| Cathode electrode material | Chemical formula | Mass percentage of C, % | Compaction density, g/cm³ | Average primary crystal particle size, nm | Proportion of primary crystal particles within 200 nm, % | Proportion of primary crystal particles of 1 µm or more, % |
|---|---|---|---|---|---|---|
| Example 1 | LiFe_{0.912}Y_{0.012}Sn_{0.024}Ce_{0.052}PO₄@ C | 1.28 | 2.55 | 260 | 40.67 | 0.93 |
| Example 2 | LiFe_{0.912}Y_{0.012}Sn_{0.024}Ce_{0.052}PO₄@ C | 1.28 | 2.58 | 260 | 40.74 | 1.24 |
| Example 3 | LiFe_{0.912}Y_{0.012}Sn_{0.024}Ce_{0.052}PO₄@ C | 1.28 | 2.59 | 270 | 40.88 | 1.58 |
| Example 4 | LiFe_{0.910}Y_{0.012}Ti_{0.026}Ce_{0.052}PO₄@ C | 1.28 | 2.61 | 280 | 41.03 | 2.16 |
| Example 5 | LiFe_{0.94}Y _{0.012}Ti_{0.018}Ce₀₀₅PO₄@C | 1.32 | 2.64 | 280 | 41.89 | 2.05 |
| Example 6 | LiFe_{0.94}Y _{0.012}Ti_{0.018}Ce₀₀₅PO₄@C | 1.34 | 2.62 | 280 | 42.16 | 1.91 |
| Example 7 | LiFe_{0.94}Y _{0.012}Ti_{0.018}Ce₀₀₅PO₄@C | 1.34 | 2.58 | 265 | 42.37 | 2.33 |
| Example 8 | LiFe_{0.94}Y _{0.012}Ti_{0.018}Ce₀₀₅PO₄@C | 1.33 | 2.56 | 260 | 45.59 | 2.58 |
| Example 9 | LiFe_{0.94}Y _{0.012}Ti_{0.018}Ce₀₀₅PO₄@C | 1.32 | 2.54 | 260 | 43.75 | 2.93 |
| Example 10 | LiFe_{0.94}Y _{0.012}Ti_{0.018}Ce₀₀₅PO₄@C | 1.33 | 2.60 | 275 | 40.81 | 2.30 |
| Example 11 | LiFe_{0.943}Y_{0.008} Ti_{0.016}Ce_{0.033}PO₄@ C | 1.28 | 2.52 | 245 | 66.73 | 0 |
| Example 12 | LiFe_{0.936}Y_{0.01}Mn_{0.018}Ce_{0.036}PO₄@ C | 1.30 | 2.56 | 340 | 32.59 | 3.12 |
| Example 13 | LiFe_{0.94}Y_{0.01}Ce_{0.03} (PO₄) _{0.99}(BO₃)_{0.01}@C | 1.29 | 2.60 | 320 | 39.76 | 2.55 |
| Comparative Example 1 | LiFe_{0.912}Ti_{0.088}PO₄@C | 1.28 | 2.42 | 350 | 30.25 | 1.89 |
| Comparative Example 2 | LiFe_{0.912}Ti_{0.088}PO₄@C | 1.28 | 2.51 | 360 | 28.76 | 3.08 |
| Comparative Example 3 | LiFe_{0.912}Ti_{0.088}PO₄@C | 1.28 | 2.48 | 360 | 29.85 | 2.95 |
| Comparative Example 4 | LiFe_{0.910}Y_{0.012}Ti_{0.026}Ce_{0.052}PO₄@ C | 1.28 | 2.52 | 370 | 29.15 | 3.38 |
| Comparative Example 5 | LiFe_{0.94}Y _{0.012}Ti_{0.018}Ce₀₀₅PO₄@C | 1.32 | 2.52 | 370 | 29.27 | 3.55 |
| Comparative Example 6 | LiFe_{0.94}Y _{0.012}Ti_{0.018}Ce₀₀₅PO₄@C | 1.34 | 2.48 | 360 | 30.16 | 3.73 |

**Table 3**

| / | 1C first charging specific capacity, mAh/g | 1C first discharging specific capacity, mAh/g | 1C first discharging efficiency, % | 1P constant power charging specific capacity, mAh/g | 1P constant power discharging specific capacity, mAh/g | 1P first discharging efficiency, % |
|---|---|---|---|---|---|---|
| Example 1 | 157.00 | 142.06 | 90.48 | 155.95 | 132.25 | 84.80 |
| Example 2 | 157.55 | 144.13 | 91.48 | 156.30 | 132.55 | 84.80 |
| Example 3 | 157.15 | 143.57 | 91.36 | 157.15 | 134.55 | 85.62 |
| Example 4 | 158.05 | 143.90 | 91.05 | 158.25 | 137.20 | 86.67 |
| Example 5 | 158.25 | 145.19 | 91.75 | 158.75 | 137.75 | 86.77 |
| Example 6 | 158.55 | 144.22 | 90.96 | 158.05 | 137.10 | 86.74 |
| Example 7 | 157.79 | 143.88 | 91.18 | 157.56 | 135.98 | 86.30 |
| Example 8 | 157.50 | 150.89 | 95.80 | 157.07 | 139.47 | 88.79 |

| | | | | | | |
|---|---|---|---|---|---|---|
| Example 9 | 156.39 | 147.22 | 94.13 | 156.81 | 137.65 | 87.78 |
| Example 10 | 157.18 | 144.26 | 91.78 | 157.26 | 137.26 | 87.28 |
| Example 11 | 158.32 | 153.23 | 96.78 | 156.89 | 141.96 | 90.48 |
| Example 12 | 156.26 | 138.77 | 88.79 | 156.39 | 129.87 | 83.04 |
| Example 13 | 158.25 | 143.19 | 90.48 | 158.75 | 133.75 | 84.25 |
| Comparative Example 1 | 156.95 | 133.20 | 84.87 | 148.05 | 123.55 | 83.45 |
| Comparative Example 2 | 157.40 | 130.36 | 82.82 | 146.00 | 121.15 | 82.98 |
| Comparative Example 3 | 156.40 | 133.84 | 85.56 | 149.20 | 125.45 | 84.08 |
| Comparative Example 4 | 156.60 | 128.21 | 81.87 | 149.05 | 125.95 | 84.05 |
| Comparative Example 5 | 156.05 | 128.23 | 82.17 | 146.70 | 122.60 | 83.57 |
| Comparative Example 6 | 156.75 | 131.44 | 83.85 | 147.35 | 123.75 | 83.98 |

By comparing the data in Table 1 and Table 2, it could be found that the example further prepared a spherical anhydrous ferric phosphate by surfactant-like polymers formed by anionic monomers and cationic monomers, resulting in a higher compaction density. Therefore, the compaction density of lithium iron phosphate prepared from anhydrous ferric phosphate was higher, indicating that the addition of the first dispersant and the second dispersant could effectively regulate the crystal morphology. The preparation method of the present application could ensure a more reasonable particle size distribution of the prepared lithium iron phosphate, which was helpful for preparing a lithium iron phosphate cathode electrode material with high compaction density and great electrical performance.

By comparing the data in Table 3, it could be found that the 1C charging performance of the lithium iron phosphate prepared in the example and the comparative example was similar, but the discharging efficiency of the comparative example was significantly lower. The 1P constant power charging performance and discharging performance of the comparative example was significantly worse. Combining the particle size distribution of lithium iron phosphate in Table 1 and Table 2, it could be seen that the addition of the first dispersant and the second dispersant could effectively regulate the crystal morphology of anhydrous ferric phosphate, thereby controlling the primary particle size distribution and morphology of lithium iron phosphate, and improving the carbon coating effect and electrochemical performance of lithium iron phosphate. Example 5 had the best compaction density and electrochemical performance, which was related to a better crystal morphology and primary particle size distribution of the lithium iron phosphate.

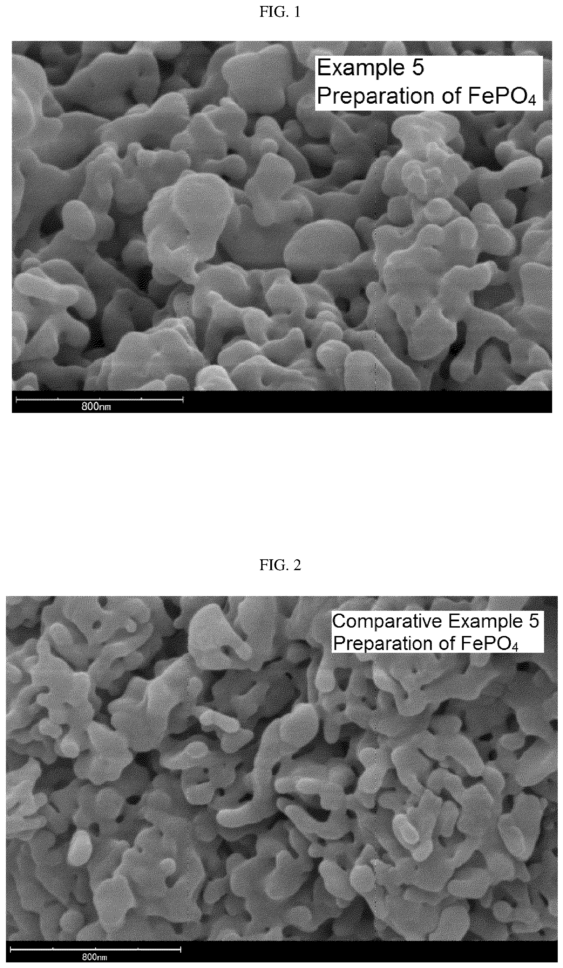

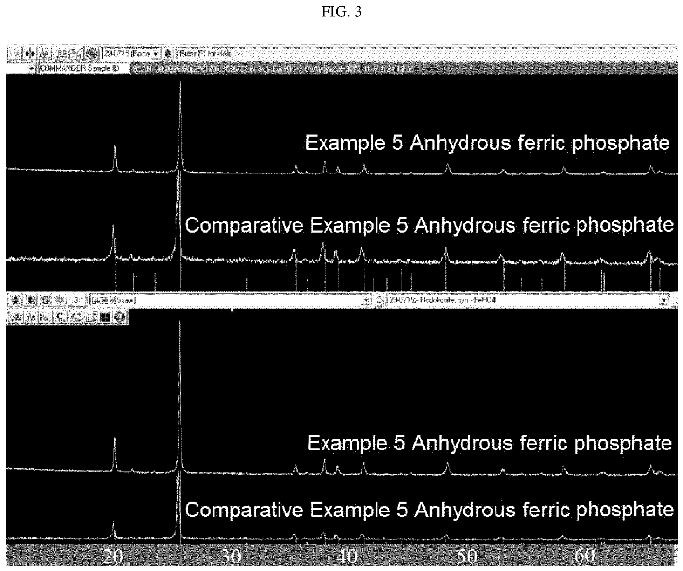

The morphology of anhydrous ferric phosphate obtained from Example 5 and Comparative Example 5 was observed, and the SEM images (scanning electron microscope images) of the two were shown in FIG. 1 and FIG. 2, respectively. The XRD comparison image was shown in FIG. 3, and the image in the upper half of FIG. 3 was an enlarged image of the lower part to better compare the diffraction peak positions and heights.

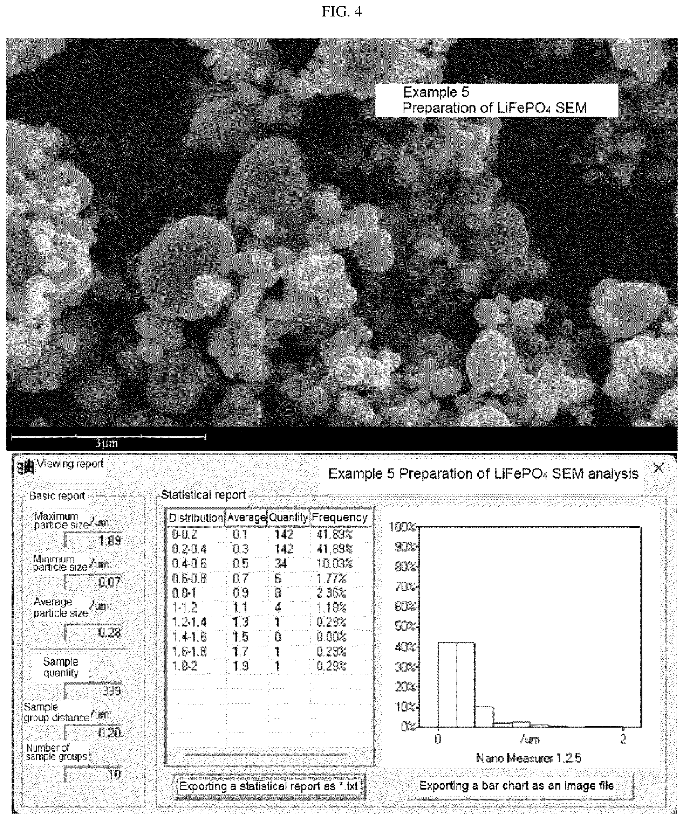

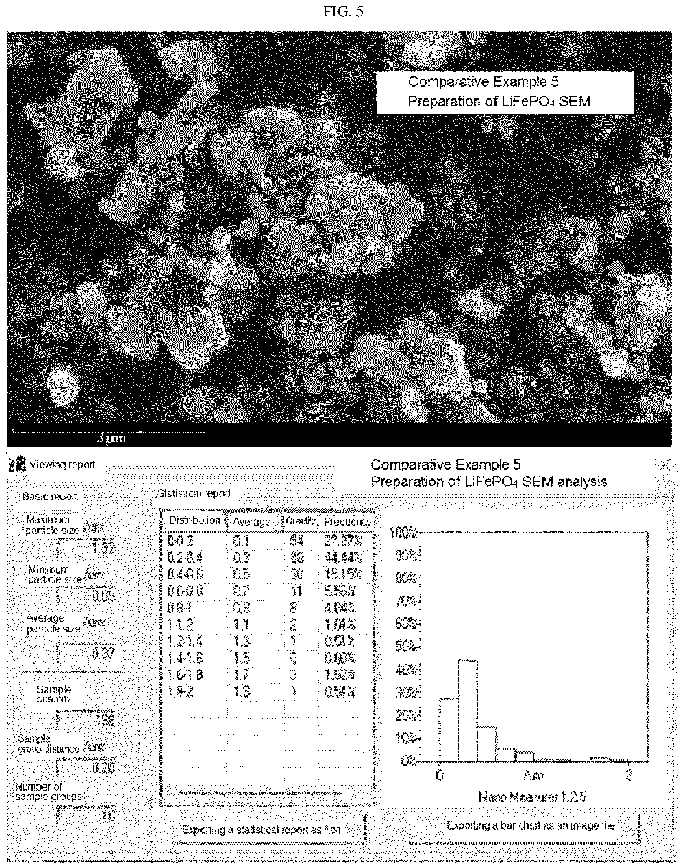

The SEM images and primary particle size distribution analysis of lithium iron phosphate obtained from Example 5 and Comparative Example 5 were shown in FIGs. 4 and 5.

From FIG. 1 and FIG. 2, it could be seen that the sphericity of the anhydrous ferric phosphate prepared by adding the first dispersant and the second dispersant in Example 5 was higher, while the anhydrous ferric phosphate prepared by Comparative Example 5 tended to grow in a long strip shape without adding any dispersant. The comparison between Table 1 and Table 2 showed that the anhydrous ferric phosphate prepared by adding the first dispersant and the second dispersant in the examples had a smaller BET specific surface area and higher compaction density.

From the XRD comparison analysis in FIG. 3, it was found that the XRD diffraction peak of anhydrous ferric phosphate prepared in Example 5 was stronger, while the XRD diffraction peak of anhydrous ferric phosphate prepared in Comparative Example 5 was significantly left skewed and had more impurities, indicating that the first and second dispersants were beneficial for promoting the generation of anhydrous ferric phosphate and regulating the crystal growth morphology of anhydrous ferric phosphate.

Comparing the SEM images and particle size distribution analysis of FIGs. 4 and 5, it was found that the lithium iron phosphate balls prepared from anhydrous ferric phosphate prepared with the addition of the first dispersant and the second dispersant in the example had better shape and a higher proportion of particle size within 200 nm, corresponding to higher compaction density in Tables 1 and 2. This indicated that the addition of the first dispersant and the second dispersant could effectively regulate the morphology of anhydrous ferric phosphate, thereby controlling the morphology and compaction density of lithium iron phosphate and improving the electrochemical performance of lithium iron phosphate.

It is to be noted that the present disclosure is not limited to the aforementioned embodiments. The above-mentioned embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by those skilled in the art, and other manners constructed by combining some of the constituent elements in the embodiments are also included in the scope of the present application.

## Claims

1. An anhydrous ferric phosphate, **characterized in that** in terms of weight percentage, a quantity proportion of particles with a particle size greater than or equal to 0.01 µm and less than 0.1 µm in primary particles of the anhydrous ferric phosphate is 10%-30%, a quantity proportion of particles with a particle size of 0.1 µm-0.2 µm is 50%-60%, a quantity proportion of particles with a particle size greater than 0.2 µm and less than 0.4 µm is 15%-30%, and a quantity proportion of particles with a particle size of 0.4 µm-0.6 µm is 0.2%-10%.

2. The anhydrous ferric phosphate according to claim 1, **characterized in that** a shape of an anhydrous ferric phosphate particle is quasi spherical, with a sphericity of 0.84-0.98; a tap density of the anhydrous ferric phosphate is 0.93 g/cm³-1.13 g/cm³, a compaction density is 1.57 g/cm³-1.61 g/cm³, and an iron to phosphorus ratio is (0.957-0.970):1.

3. A method for preparing anhydrous ferric phosphate, **characterized in that** it comprises:
mixing a ferrous source with a first dispersant to obtain a first raw material liquid; mixing a first phosphorus source with a second dispersant to obtain a second raw material liquid;
mixing the first raw material liquid and the second raw material liquid with a first oxidant, and undergoing a first reaction treatment to obtain a first mixture;
adding a second phosphorus source to the first mixture, undergoing a second reaction treatment, and adding a second oxidant to obtain a second mixture;
adjusting a pH value and temperature of the second mixture, and undergoing a third reaction treatment to obtain the anhydrous ferric phosphate; and
the first dispersant comprises a cationic monomer and a coupling agent, and the second dispersant comprises an anionic monomer and a chain transfer agent.

4. The preparation method of the anhydrous ferric phosphate according to claim 3, **characterized in that**
the cationic monomer comprises diallyl dimethyl ammonium chloride and/or acryloyloxyethyl trimethyl ammonium chloride;
and/or, the coupling agent comprises vinyltrimethoxysilane and/or 3-(methacryloyloxy)propyltrimethoxysilane;
when the cationic monomer comprises diallyl dimethyl ammonium chloride and acryloyloxyethyl trimethyl ammonium chloride, a mass ratio of diallyl dimethyl ammonium chloride to acryloyloxyethyl trimethyl ammonium chloride is 1:(2.5-3.5);
and/or,
the anionic monomer comprises one or more of methacrylic acid, itaconic acid, and fumaric acid; and/or, the chain transfer agent comprises sodium hypophosphite and/or isopropanol;
when the anionic monomer comprises methacrylic acid and itaconic acid, a mass ratio of methacrylic acid to itaconic acid is 1:(2.5-3.5); and when the anionic monomer comprises methacrylic acid and fumaric acid, a mass ratio of methacrylic acid to fumaric acid is 1:(2.5-3.5);
and/or,
a ratio of the amount of substance of the cationic monomer to the coupling agent is 100:(20-35); and/or,
a ratio of the amount of substance of the anionic monomer to the chain transfer agent is 100:(10-15).

5. The preparation method of the anhydrous ferric phosphate according to claim 3 or 4, **characterized in that**
a ratio of the amount of substance of an iron element in the ferrous source to the first dispersant is 1:(0.0125-0.0150); and/or,
a ratio of the amount of substance of an iron element in the ferrous source to a phosphorus element in the phosphorus source is 1:(0.9-1.1); and/or,
a ratio of the amount of substance of a phosphorus element in the phosphorus source to the second dispersant is 1:(0.0150-0.0170);
and/or, the ferrous source is prepared by the following method: mixing a by-product of titanium dioxide containing ferrous sulfate with water, heating and dissolving, adding an ammonia water with a mass fraction of 5%-15% for settling, filtering and retaining a filtrate to obtain the ferrous source;
and/or, independently, the first phosphorus source and the second phosphorus source are prepared by the following method: dissolving monoammonium phosphate with phosphoric acid and water, filtering, and adding an ammonia water with a mass fraction of 5%-15% to an obtained filtrate to adjust a pH value of the obtained filtrate to 6-8.

6. The preparation method of the anhydrous ferric phosphate according to any one of claims 3 to 5, **characterized in that**
the first oxidant comprises hydrogen peroxide and/or sodium peroxide; and/or,
the second oxidant comprises hydrogen peroxide and/or sodium peroxide; and/or,
a mass ratio of the first phosphorus source to the second phosphorus source is (15-25):(75-85);
and/or,
a ratio of the amount of substance of an iron element in the ferrous source to the first oxidant is 1:(0.6-1.1); and/or, a ratio of the amount of substance of an iron element in the ferrous source to the second oxidant is 1:(2.1-2.8).

7. The preparation method of the anhydrous ferric phosphate according to any one of claims 3 to 6, **characterized in that**
in the first reaction treatment, a temperature is 40 °C-60 °C, and a time is 0.5 h-1 h; and/or,
in the second reaction treatment, a temperature is 40 °C-60 °C, and a time is 5 min-10 min.

8. The preparation method of the anhydrous ferric phosphate according to any one of claims 3 to 7, **characterized in that** the step of adjusting a pH value and temperature of the second mixture, and undergoing a third reaction treatment to obtain the anhydrous ferric phosphate comprises:
adjusting a temperature of the second mixture to 40 °C-60 °C, controlling a pH value of the second mixture to 0.9-1.5, raising the temperature to 90 °C-95 °C, and reacting to the pH value of 1.6-2.0 to obtain a third mixture; and
subjecting the third mixture sequentially to pressure filtration, rinsing, flash evaporation, drying, crushing, and sieving to obtain the anhydrous ferric phosphate.

9. A cathode electrode material, **characterized in that** a general formula of the cathode electrode material is LiFe_{1-a-b-c}YₐCe_{b}M_{c}PO₄@C, wherein M is one or more of tin, titanium, boron, and manganese, a is 0.007-0.013, b is 0.029-0.057, and c is 0.01-0.033; and a mass percentage of C in the cathode electrode material is 1.2%-1.4%.

10. The cathode electrode material according to claim 9, **characterized in that** an average particle size of primary particles of the cathode electrode material is 0.24 µm-0.34 µm;
a number fraction of primary particles with an average particle size greater than or equal to 1 µm in the cathode electrode material is less than or equal to 3.20%, and a compaction density is 2.52 g/cm³-2.64 g/cm³.

11. A method for preparing a cathode electrode material, **characterized in that** it comprises the following steps:
mixing the anhydrous ferric phosphate according to claim 1 or 2, a lithium source, a carbon source, a chelating agent, and a dopant with water to obtain a mixed material;
sintering the mixed material under a protective atmosphere to obtain the cathode electrode material;
and
the dopant comprises yttrium oxide, cerium oxide, and other compounds containing oxygen, and the other compounds containing oxygens comprise one or more of tin oxide, titanium oxide, boron oxide, and compounds containing manganese and oxygen.

12. The method for preparing the cathode electrode material according to claim 11, **characterized in that** the chelating agent comprises glycerol and/or sodium gluconate; and/or,
the dopant comprises yttrium oxide, cerium oxide, and other compounds containing oxygens, wherein the other compounds containing oxygens comprise one or more of tin dioxide, titanium dioxide, boron trioxide, and manganese carbonate; a mass ratio of the yttrium oxide, the cerium oxide, and the other compounds containing oxygens is 1:(2-3):(1-2); and/or,
a mass ratio of the anhydrous ferric phosphate to the chelating agent is 1:(0.02-0.03); and/or, a mass ratio of the anhydrous ferric phosphate to the dopant is 1:(0.008-0.009); and/or,
a ratio of the amount of substance of the anhydrous ferric phosphate to the lithium source is 1:(1-1.05); and/or, a mass ratio of the anhydrous ferric phosphate to the carbon source is 1:(0.09-0.11).

13. The method for preparing the cathode electrode material according to claim 11 or 12, **characterized in that** the step of sintering the mixed material under a protective atmosphere to obtain the cathode electrode material comprises:
grinding the mixed material to obtain a ground material, and a D50 particle size of the ground material is 0.38 µm-0.42 µm;
conducting spray drying on the ground material to obtain a sprayed material, and a D50 particle size of the sprayed material is 3.4 µm-6.7 µm;
sintering the sprayed material under the protective atmosphere to obtain the cathode electrode material; and
in the sintering, a temperature is 760 °C-820 °C and a time is 10 h-18 h.

14. A cathode electrode sheet, **characterized in that** the cathode electrode sheet comprises a cathode electrode current collector and a cathode electrode active layer arranged on at least one side of the cathode electrode current collector, wherein the cathode electrode active layer comprises the cathode electrode material according to claim 9 or 10.

15. A secondary battery, **characterized in that** the secondary battery comprises the cathode electrode sheet according to claim 14.
